# EUROPEAN PATENT SPECIFICATION

(11) **EP 4 592 967 B1**
(45) Date of publication and mention of the grant of the patent: **28.10.2026**
(21) Application number: 23882909.7
(22) Date of filing: 20.09.2023
(51) Int. Cl.: G06T 19/20, G06T 15/02, G06T 19/00, G06T 15/04, G06T 15/80, H04N 13/383, H04N 13/332, H04N 13/15, H04N 23/57, G06T 7/90, G06V 10/54, G06V 10/56, G06V 20/20, G06V 10/60, H04N 5/262, H04N 5/265

(54) **ELECTRONIC DEVICE AND METHOD FOR ACQUIRING IMAGE HAVING CHANGED RENDERING STYLE**
ELEKTRONISCHE VORRICHTUNG UND VERFAHREN ZUR ERFASSUNG EINES BILDES MIT GEÄNDERTEM WIEDERGABESTIL
DISPOSITIF ÉLECTRONIQUE ET PROCÉDÉ D'ACQUISITION D'IMAGE AYANT UN STYLE DE RENDU MODIFIÉ

(30) Priority: 25.10.2022 KR 20220138762; 25.11.2022 KR 20220160962
(43) Date of publication of application: 30.07.2025
(73) Proprietor: Samsung Electronics Co., Ltd., Suwon-si, Gyeonggi-do 16677 (KR)
(72) Inventor: LEE, Jungjik, Suwon-si Gyeonggi-do 16677 (KR); YEOM, Donghyun, Suwon-si Gyeonggi-do 16677 (KR); KIM, Sungoh, Suwon-si Gyeonggi-do 16677 (KR); WOO, Hyuntaek, Suwon-si Gyeonggi-do 16677 (KR); LEE, Dasom, Suwon-si Gyeonggi-do 16677 (KR)
(74) Representative: HGF
(86) International application number: PCT/KR2023/014321
(87) International publication number: WO 2024/090802

(56) References cited:
- WO-A1-2021/262263
- JP-A- 2020 530 925
- JP-A- 2022 530 518
- KR-A- 20160 044 252
- KR-A- 20220 017 242
- KR-A- 20220 017 242
- KR-A- 20220 138 112
- MARINO EMANUELE ET AL: "Background-Aware Colorization Technique for Augmented Reality Applications", IEEE ACCESS, IEEE, USA, vol. 9, 17 November 2021 (2021-11-17), pages 161761 - 161772, XP011893362, DOI: 10.1109/ACCESS.2021.3129076

## Description

### [Technical Field]

The following descriptions relate to an electronic device and a method for obtaining an image with a changed rendering style.

### [Background Art]

In a VR (virtual reality) or augmented reality (AR) environment, an electronic device may synthesize and providing information on a real space and information on a virtual space, thereby providing its user with a more diverse experience. Pass-through VR is a technology that generates an image of a real-world space through a camera to display a mixed image mixed with an image of a virtual space.

Prior art examples include:
WO 2021/262263 A1 which discloses stylization filters and region-based rendering in an AR passthrough system;
KR 2022 0017242 A which discloses a method for applying a light effect or a color effect to an image captured by a camera; and
MARINO EMANUELE ET AL: "Background-Aware Colorization Technique for Augmented Reality Applications",IEEE ACCESS, IEEE, USA, vol. 9, 17 November 2021 (2021-11-17), pages 161761-161772, DOI: 10.1109/ACCESS.2021.3129076, which discloses a background-aware colorization technique for augmented reality applications.

### [Disclosure]

### [Technical Solution]

A wearable electronic device is provided. The wearable electronic device may include a camera. The wearable electronic device may include a display. The wearable electronic device may include a processor. The processor may be configured to identify a first image including a visual object through a software application. The processor may be configured to, based on a property of the visual object in the first image, identify a color effect to be applied to a portion of a background image corresponding to the visual object. The processor may be configured to identify rendering style that is applied to the first image. The processor may be configured to obtain a third image as the background image, by converting a second image, obtained through the camera, representing an environment around the wearable electronic device, based on the color effect and the rendering style. The processor may be configured to display the first image together with the third image through the display. The property may include luminescent property, texture property, or temperature property. The rendering style may include a cartoon style, a retro style, an outline style, or a black and white style.

A method performed by a wearable electronic device may include identifying a first image including a visual object through a software application. The method may include, based on a property of the visual object in the first image, identifying a color effect to be applied to a portion of a background image corresponding to the visual object. The method may include identifying rendering style that is applied to the first image. The method may include obtaining a third image as the background image by converting a second image, obtained through a camera of the wearable electronic device, representing an environment around the wearable electronic device, based on the color effect and the rendering style. The method may include displaying the first image together with the third image through a display of the wearable electronic device. The property may include luminescent property, texture property, or temperature property. The rendering style may include a cartoon style, a retro style, an outline style, or a black and white style.

### [Brief Description of Drawings]

FIG. 1 is a block diagram of an electronic device in a network environment according to various embodiments.
FIG. 2A illustrates an example of a wearable electronic device according to an embodiment of the disclosure.
FIG. 2B illustrates an example of hardware included in a wearable electronic device according to an embodiment of the disclosure.
FIG. 2C illustrates an example of obtaining an image with a changed rendering style through a wearable electronic device according to an embodiment of the disclosure.
FIG. 3A is a flowchart illustrating an example of a method for obtaining a synthesized image based on information on a rendering style according to an embodiment of the disclosure.
FIG. 3B illustrates an example of obtaining information on a rendering style through a plurality of images according to an embodiment of the disclosure.
FIG. 3C illustrates an example of obtaining a synthesized image based on information on a rendering style according to an embodiment of the disclosure.
FIG. 4A is a flowchart illustrating an example of a method for obtaining information on a rendering style according to an embodiment of the disclosure.
FIG. 4B illustrates an example of providing a user with a preset for a rendering style according to an embodiment of the disclosure.
FIG. 5 is a flowchart illustrating an example of a method for obtaining a synthesized image based on information on a rendering style in a plurality of software applications according to an embodiment of the disclosure.
FIG. 6A, FIG. 6B, and FIG. 6C illustrate examples of images with changed rendering styles according to an embodiment of the disclosure.
FIG. 7 illustrates another example of obtaining a synthesized image based on information on a rendering style according to an embodiment of the disclosure.
FIG. 8 illustrates an example of obtaining a synthesized image with its partial region changed, based on information on a rendering style according to an embodiment of the disclosure.
FIG. 9A, FIG. 9B, and FIG. 9C illustrate examples of obtaining a synthesized image based on information on a rendering style in a plurality of software applications according to an embodiment of the disclosure.
FIG. 10 illustrates an example of applying a rendering style based on a visual object including a luminescent property of a software application according to an embodiment of the disclosure.

### [Mode for Carrying out Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to a configuration of devices (e.g., processor, camera, display, module, etc.), terms referring to operational states (e.g., step, operation, procedure), terms referring to signals (e.g., signal, information, etc.), and terms referring to data (e.g., parameter, value, etc.) are only of examples for convenience of explanation. Therefore, the disclosure is not limited to those terms described below, and other terms having equivalent technical meanings may be used therefor.

Further, throughout the disclosure, an expression, such as e.g., 'above (more than)' or 'below (less than)' may be used to determine whether a specific condition is satisfied or fulfilled, but it is merely a description for expressing an example and is not intended to exclude the meaning of 'more than or equal to' or 'less than or equal to'. A condition described as 'more than or equal to' may be replaced with an expression, such as 'above', a condition described as 'less than or equal to' may be replaced with an expression, such as 'below', and a condition described as 'more than or equal to and below' may be replaced with 'above and less than or equal to', respectively. Furthermore, hereinafter, 'A' to 'B' means at least one of the elements from A (including A) to B (including B).

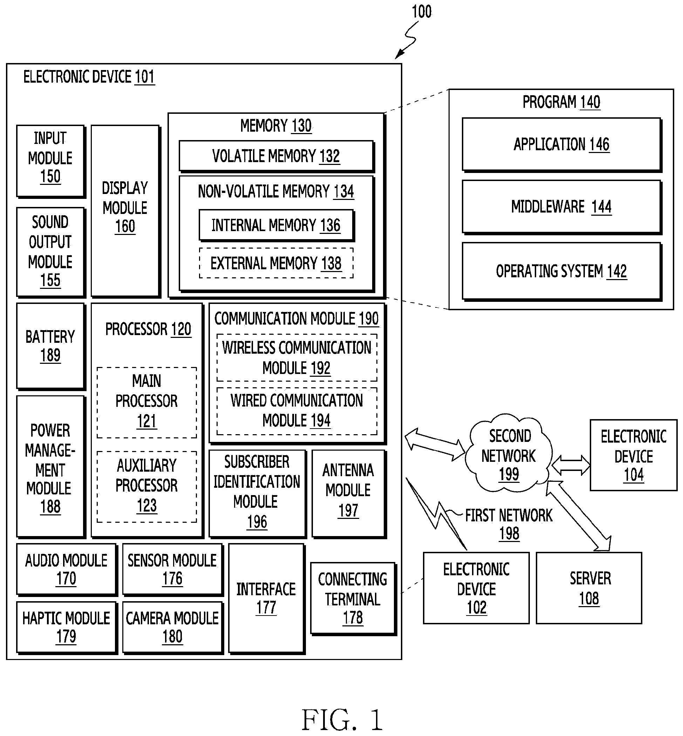

FIG. 1 is a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may be a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

VR (Virtual Reality) is a technology that allows real-world objects to appear as if they exist in an artificial environment. AR (Augmented Reality) is a technology that synthesizes any objects or information to real-world objects to make them appear as if they exist in their original environment. Electronic devices for VR or AR may provide virtualized or augmented information based on real-world objects.

For example, the electronic device may include a wearable electronic device for providing a VR or AR environment to a user. For example, the wearable electronic device may include a pass-through VR device capable of displaying a virtual environment and a real-world environment together through a camera. Here, the pass-through VR may refer to a technology that generates an image of the real-world environment through a camera and display mixing it with an image of the virtual environment.

Hereinafter, for convenience of explanation, a video see-through (VST) method for generating and providing new information on a real-world environment viewed through a camera will be described. However, the disclosure is not limited thereto. The disclosure may also be applied to an optical see-through (OST) method for adding and providing generated information to an environment actually visible to the eyes of a user.

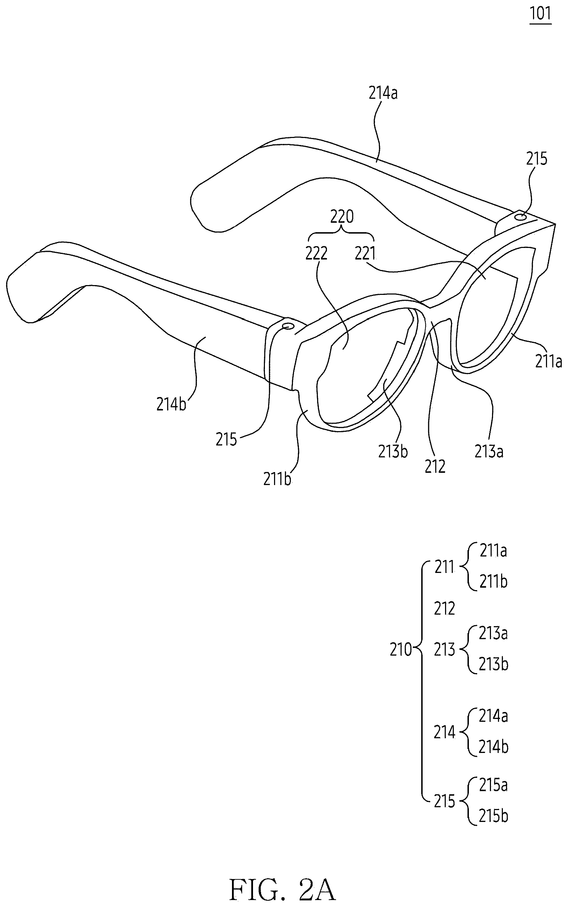

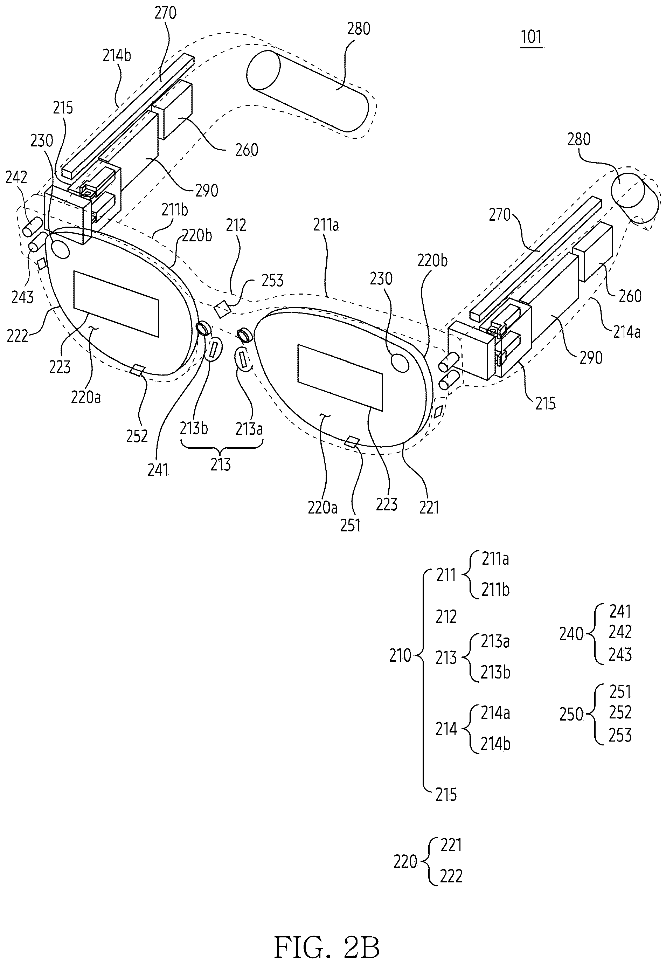

FIG. 2A illustrates an example of a wearable electronic device according to an embodiment of the disclosure. FIG. 2B illustrates an example of hardware included in a wearable electronic device according to an embodiment of the disclosure.

Referring to FIGS. 2A and 2B, the electronic device 101 (e.g., the electronic device 101 of FIG. 1) according to an embodiment may include some or all of the components of the electronic device 101 of FIG. 1. According to an embodiment, the electronic device 101 may include a housing 210, at least one display 220, at least one optical unit 230, at least one camera 240 (e.g., the camera module 180 of FIG. 1), at least one microphone 250, a speaker 260, an antenna module 270 (e.g., the antenna module 197 of FIG. 1), a battery 280 (e.g., the battery 189 of FIG. 1), and/or a printed circuit board 290. According to an embodiment, the electronic device 101 may be referred to as a wearable device worn on a part of a user's body. The electronic device 101 may be configured to provide a user with augmented reality (AR), virtual reality (VR), or a mixed reality (MR) in which the augmented reality and the virtual reality are mixed. The electronic device 101 may be configured to provide the augmented reality through the display 220 that is adapted to display a real-world image provided by light received from the outside of the electronic device 101 and a virtual object superimposed on the real-world image. The real-world image may be implemented by the light received from the outside of the electronic device 101 without any additional separate data processing by the electronic device 101. The virtual object may include at least one of text and an image corresponding to various information related to an object in the real-world image. However, the disclosure is not limited thereto, and the virtual object may include at least one of text and an image corresponding to various information related to other objects not included in the real-world image.

The housing 210 may define at least a part of an outer surface of the electronic device 101. At least a part of the housing 210 may contact a part of the user's body when the electronic device 101 is worn by the user. According to an embodiment, the housing 210 may support components included in the electronic device 101. For example, some of the components included in the electronic device 101 may be disposed inside the housing 210. For example, another some of the components included in the electronic device 101 may be exposed to the outside of the housing 210. According to an embodiment, the housing 210 may include at least one rim 211, a bridge 212, at least one nose pad 213, at least one temple 214, and/or a hinge structure 215.

The at least one rim 211 may support the display 220. When the electronic device 101 is worn by a user, the at least one rim 211 may be worn at a position corresponding to the user's eyes. According to an embodiment, the at least one rim 211 may include a first rim 211a and a second rim 211b. The first rim 211a and the second rim 211b may be spaced apart from each other. For example, when the electronic device 101 is worn by a user, the first rim 211a may be positioned to correspond to the user's left eye, and the second rim 211b may be positioned to correspond to the user's right eye.

The bridge 212 may be coupled to the at least one rim 211. According to an embodiment, the bridge 212 may connect the first rim 211a and the second rim 212b. For example, the bridge 212 may extend between an edge of the first rim 211a and an edge of the second rim 211b. When the electronic device 101 is worn by the user, the bridge 212 may be positioned between the user's left eye and the right eye.

At least one nose pad 213 may maintain the position of the electronic device 101 in place when the electronic device 101 is worn by the user. For example, when the electronic device 101 is worn by the user, the at least one nose pad 213 may be in contact with the user's nose. According to an embodiment, the at least one nose pad 213 may include a first nose pad 213a and a second nose pad 213b spaced apart from the first nose pad 213a. For example, when the electronic device 101 is worn by the user, the first nose pad 213a may be disposed on an edge of the first rim 211a facing the user. For example, when the electronic device 101 is worn by the user, the second nose pad 213b may be disposed on an edge of the second rim 211b facing the user.

At least one temple 214 may maintain the position of the electronic device 101 in place when the electronic device 101 is worn by the user. When the electronic device 101 is worn by the user, the at least one temple 214 may be in contact with the user's ear. According to an embodiment, the at least one temple 214 may be coupled to at least one rim 211. For example, at least one temple 214 may include a first temple 214a coupled to the first rim 211a and a second temple 214b coupled to the second rim 211b. According to an embodiment, the at least one temple 214 may provide a space in which components of the electronic device 101 are disposed.

The hinge structure 215 may connect at least one rim 211 and at least one temple 214. The hinge structure 215 may couple the at least one temple 214 and the at least one rim 211 so that the at least one temple 214 is rotatable with respect to the at least one rim 211. The first temple 214a may, for example, be coupled, via the hinge structure 215, to be rotatable with respect to the first rim 211a. The second temple 214b may, for example, be coupled to be rotatable with respect to the second rim 211b, through the hinge structure 215.

At least one display 220 may be configured to display visual information to a user. The at least one display 220 may include a substantially transparent or translucent lens. For example, the at least one display 220 may be referred to as a see-through display, but the disclosure is not limited thereto. According to an embodiment, the at least one display 220 may be surrounded by at least one rim 211. For example, the at least one display 220 may include a first display 221 and a second display 222. The second display 220 may be spaced apart from the first display 221. The first display 221 may be coupled to the first rim 211a, and the second display 222 may be coupled to the second rim 211b.

Referring to FIG. 2B, according to an embodiment, the at least one display 220 may include a first surface 220a and a second surface 220b opposite to the first surface 220a. The at least one display 220 may include a display area disposed on the second surface 220b. For example, light incident through the first surface 220a from the outside of the electronic device 101 may pass through the first surface 220a and the second surface 220b. Light passing through the second surface 220b may be transmitted to the user.

According to an embodiment, the at least one display 220 may include a wave guide 223. The wave guide 223 may transmit light transmitted from at least one optical unit 230 to the user, based on guiding to change a traveling direction of the light transmitted from the at least one optical unit 230. The light emitted from the at least one optical unit 230 may be transmitted to the user by the wave guide 223 through the second surface 220b of the at least one display 220. For example, the wave guide 223 may transmit the light emitted from the at least one optical unit 230 to the user by diffracting the light within the wave guide 223. When the wave guide 223 diffracts the light emitted from the at least one optical unit 230, the wave guide 223 may include a diffractive optical element (DOE) or a holographic optical element (HOE) disposed in the wave guide 223. For example, the wave guide 223 may reflect the light emitted from the at least one optical unit 230 within the wave guide 223 to transmit the light to the user. When the wave guide 223 reflects the light emitted from the at least one optical unit 230, the wave guide 223 may include a plurality of mirrors disposed within the wave guide 223.

The at least one optical unit 230 may emit light for displaying a virtual object on at least one display 220. For example, the at least one optical unit 230 may include a projector. For example, the electronic device 101 may transmit data for displaying the virtual object to the at least one optical unit 230. The at least one optical unit 230 may emit light toward the wave guide 223 based on receiving data for displaying the virtual object. The wave guide 223 may transmit light received from the at least one optical unit 230 to a display area on the second surface 220b of the display 220. The light emitted by the at least one optical unit 230 may pass through the second surface 220b to be transmitted to the user together with light realizing a real-world image transmitted from the outside of the electronic device 101. The light emitted from the at least one optical unit 230 and the light transmitted from the outside of the electronic device 101 may provide the user with augmented reality. According to an embodiment, the at least one optical unit 230 may be disposed on the at least one display 220. For example, the at least one optical unit 230 may be surrounded by at least one rim 211, but the disclosure is not limited thereto. For example, the at least one optical unit 230 may be included in the at least one display 220.

At least one camera 240 may be configured to obtain an image based on receiving light from an external object of the electronic device 101. According to an embodiment, the at least one camera 240 may include a gaze tracking camera 241, a motion recognition camera 242, and/or a photographing camera 243.

The gaze tracking camera 241 may output data indicating the user's gaze wearing the electronic device 101. For example, the electronic device 101 may detect the gaze from an image including the user's pupils obtained through the gaze tracking camera 241. According to an embodiment, the gaze tracking camera 241 may include a plurality of gaze tracking cameras respectively corresponding to the user's left eye and the user's right eye. According to an embodiment, the electronic device 101 may match the user's gaze with visual information provided on at least one display 220, through the gaze tracking camera 241 for tracking the gaze of the user wearing the electronic device 101. The gaze tracking camera 241 may be configured to capture an image of the user's pupil to determine the user's gaze. For example, the gaze tracking camera 241 may be configured to capture an image of the user's pupil to determine the user's gaze. For example, the gaze tracking camera 241 may receive gaze detection light reflected from the user's pupil and track the user's gaze, based on position and movement of the received gaze detection light. According to an embodiment, the gaze tracking camera 241 may be disposed inside the housing 210. The gaze tracking camera 241 may be disposed in the housing 210 to face the user's left and/or right eyes. For example, the gaze tracking camera 241 may be disposed on at least one rim 211, but the disclosure is not limited thereto. For example, the gaze tracking camera 241 may be disposed on the bridge 212.

The motion recognition camera 242 may provide a specific event onto the screen provided on at least one display 220, by recognizing movement of at least a part of the user's body (e.g., the user's torso, hands, or face). The motion recognition camera 242 may obtain a signal corresponding to a gesture of the user for gesture recognition by the electronic device 101 and provide a display corresponding to the signal to the at least one display 220. The electronic device 101 may identify the signal corresponding to the gesture and perform a designated function based on the identification. For example, the electronic device 101 may be turned on/off based on identifying the signal corresponding to the gesture. For example, the electronic device 101 may display a virtual object on the at least one display 220 through at least one optical unit 230 based on identifying the signal corresponding to the gesture. According to an embodiment, the motion recognition camera 242 may be disposed inside the housing 210. For example, the motion recognition camera 242 may be disposed inside at least one rim 211, but the disclosure is not limited thereto. The motion recognition camera 242 may be disposed inside the bridge 212.

The photographing camera 243 may capture a real-world image or background to be matched with a virtual image to implement augmented reality or mixed reality content. The photographing camera 243 may capture an image of a specific object present at a position viewed by the user, and the electronic device 101 may provide the image captured from the photographing camera 243 to the at least one display 220. The at least one display 220 may display a synthesized image in which information on a real-world image or background including the image of the specific object captured using the photographing camera 243 is overlapped with a virtual image provided through the at least one optical unit 230. According to an embodiment, the photographing camera 243 may be disposed inside at least one rim 211. The photographing camera 243 may include a plurality of photographing cameras spaced apart from each other.

At least one microphone 250 may be configured to obtain audio from the outside of the electronic device 101. According to an embodiment, the at least one microphone 250 may be disposed inside the housing 210. For example, the at least one microphone 250 may include a first microphone 251, a second microphone 252, and/or a third microphone 253. The first microphone 251 may be disposed inside the first rim 211a. The second microphone 252 may be disposed inside the second rim 211b. The third microphone 253 may be disposed between the first microphone 251 and the second microphone 252. For example, the third microphone 253 may be disposed inside the bridge 212 of the housing 210. However, the disclosure is not limited thereto, and the number and arrangement of the at least one microphone 250 may be changed unlike FIG. 2B. For example, the at least one microphone 250 may be disposed inside at least one temple 214. According to an embodiment, when the number of the at least one microphone 250 included in the electronic device 101 is two or more, the electronic device 101 may identify a direction of a sound signal using a plurality of microphones 251, 252, and 253 disposed on different portions of the housing 200.

The speaker 260 may be configured to output audio signals to the outside of the electronic device 101. According to an embodiment, the speaker 260 may be positioned to be adjacent to the user's ear while the electronic device 101 is worn on the user. For example, the speaker 260 may be disposed inside at least one temple 214 in contact with the user's ear. For example, the speaker 260 may be disposed inside the first temple 214a to be adjacent to the user's left ear. For example, the speaker 260 may be disposed inside the second temple 214b to be adjacent to the user's right ear.

The antenna module 270 may transmit a signal or power to the outside of the electronic device 101 or receive a signal or power from the outside of the electronic device 101. The antenna module 270 may be electrically and/or operatively connected to communication circuity. According to an embodiment, the antenna module 270 may be disposed inside at least one temple 214. For example, the antenna module 270 may be disposed inside the first temple 214a. For example, the antenna module 270 may be disposed inside the second temple 214b. According to an embodiment, at least a part of the antenna module 270 may be viewable from the outside of the at least one temple 214, but the disclosure is not limited thereto.

The battery 280 may supply power to electronic components of the electronic device 101. According to an embodiment, the battery 280 may be disposed inside at least one temple 214. For example, the battery 280 may be disposed inside the first temple 214a. For example, the battery 280 may be disposed inside the second temple 214b. According to an embodiment, the battery 280 may be disposed at the other end of the at least one temple 214 opposite to one end of the at least one temple 214 connected to at least one rim 211. For example, the battery 280 may be disposed inside the other end of the first temple 214a opposite to one end of the first temple 214a connected to the first rim 211a. For example, the battery 280 may be disposed inside the other end of the second temple 214b opposite to one end of the second temple 214b connected to the second rim 211b.

The printed circuit board 290 may establish electrical connections between electronic components in the electronic device 101. For example, the printed circuit board 290 may form an electrical connection between electronic components disposed on the printed circuit board 290. For example, the printed circuit board 290 may form an electrical connection between the electronic components disposed outside the printed circuit board 290 and the electronic components (e.g., the processor 120 of FIG. 1) disposed on the printed circuit board 290. According to an embodiment, the printed circuit board 290 may be disposed inside the at least one temple 214. For example, the printed circuit board 290 may include a plurality of printed circuit boards disposed inside the first temple 214a and the second temple 214b, respectively. The printed circuit board 290 may include a flexible printed circuit board (FPCB) for connecting a plurality of printed circuit boards.

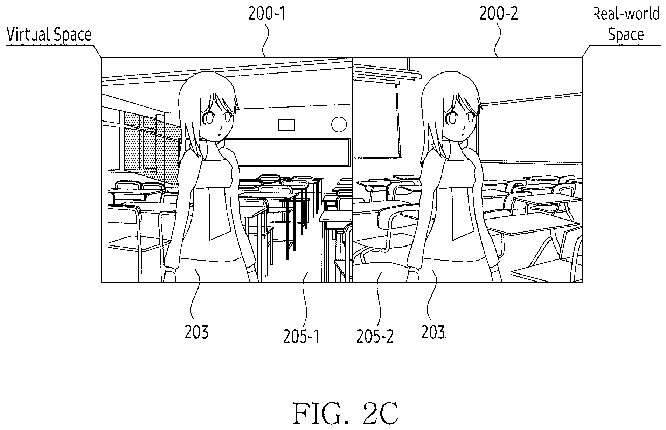

FIG. 2C illustrates an example of obtaining an image with a changed rendering style through a wearable electronic device according to an embodiment of the disclosure.

The rendering style may represent a style that is applied upon rendering a two-dimensional or three-dimensional scene as an image. The wearable electronic device may refer to the electronic device 101 of FIGS. 1, 2A, and 2B for providing a user with a VR or AR environment. Hereinafter, for convenience of explanation, a wearable electronic device for providing a VR environment will be described as an example. However, the disclosure is not limited thereto.

Referring to FIG. 2C, illustrated are examples of synthesizing an image (hereinafter, referred to as 'VR image') obtained through a software application providing a VR environment and an image of a surrounding environment (hereinafter, referred to 'image of a real-world environment') of a wearable electronic device obtained through a camera of the wearable electronic device are illustrated. The term 'environment' may also be referred to as a space.

The first example 200-1 illustrates an example in which an image 205-1 of the real-world environment with a changed rendering style is synthesized with a VR image 203. Here, the image 205-1 of the real-world environment may represent a virtual image applied with a rendering style identical or similar to that of the rendering style (e.g., a cartoon style) of the VR image 203. In contrast, the second example 200-2 illustrates an example in which the image 205-2 of the real-world environment with no rendering style changed is synthesized with the VR image 203. Here, the real-world environment image 205-2 may represent a real-world image of the surrounding environment viewed by the user of the wearable electronic device.

Referring to the second example 200-2, the wearable electronic device may provide a real-world environment image 205-2 together with the VR image 203 to a user using a software application that provides a VR environment. In other words, the user may be provided with an image in which an image 205-2 of the real-world environment is synthesized together with a cartoon style of VR image 203. Images of different styles included in the synthesized image may allow the user to feel a sense of heterogeneity of the synthesized image displayed through a display of the wearable electronic device. That is, in the second example 200-2, it combines the image 205-2 of the real-world environment and the VR image 203 as it is, or applies only a simple filtering to the image 205-2 of the real-world environment, making no exchange of information between the real-world environment and the VR environment, so that a heterogeneous synthesized image may be derived. Accordingly, while the user experiences the VR environment, a sense of immersion may deteriorate.

Hereinafter, embodiments of the disclosure propose a method for obtaining an image with a changed rendering style, by identifying the rendering style of the VR image 203 and applying the identified rendering style to the image 205-1 of the actual environment viewed by the user, as in the first example 200-1. In doing so, embodiments of the disclosure may provide a more natural and immersive VR experience by synthesizing the image with the changed rendering style and the VR image and providing the same to the user.

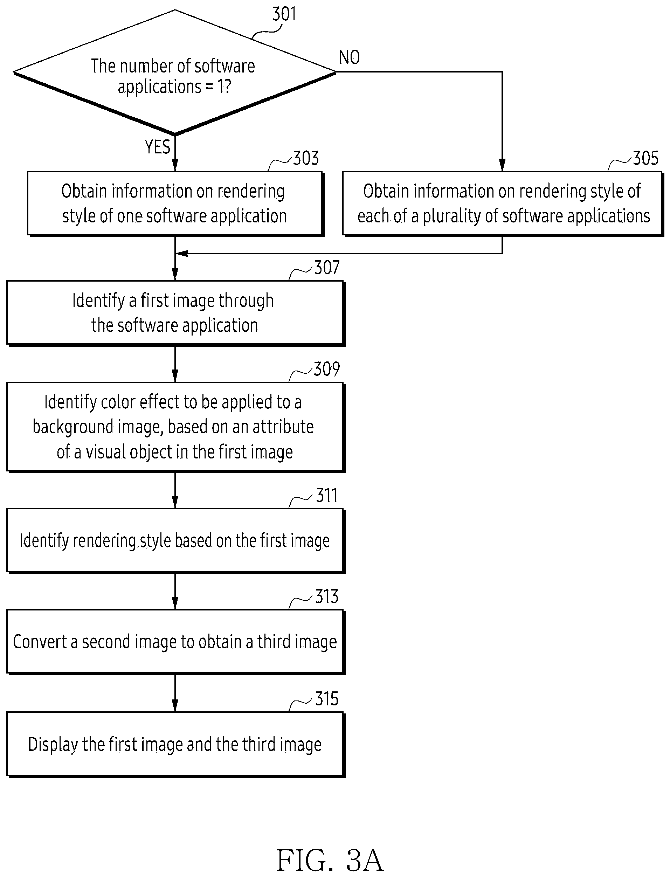

FIG. 3A is a flowchart illustrating an example of a method for obtaining a synthesized image based on information on a rendering style according to an embodiment of the disclosure.

The rendering style may represent a rendering style that is applied in rendering a two-dimensional or three-dimensional scene as an image. The synthesized image may represent an image of synthesizing an image obtained through a software application providing a VR environment and an image of an environment around the wearable electronic device. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto.

The flowchart of FIG. 3A may be performed by the electronic device 101 of FIGS. 1, 2A, and 2B. For example, operations of the flowchart of FIG. 3A may be performed by the processor 120 of the electronic device 101 of FIGS. 1, 2A, and 2B.

Referring to FIG. 3A, in operation 301, the processor 120 may identify whether the number of software applications is one (= 1). Here, the software application may refer to a software application related to a VR or AR environment. For example, the software application may be a software application capable of being used in the VR environment or the AR environment. The processor 120 may identify the number of software applications that may be displayed through a display (e.g., the display module 150 of FIG. 1) of the electronic device 101. For example, when one software application is displayed throughout the entire display area of the electronic device 101, the processor 120 may identify the number of software applications as one. One software application may also be referred to as an immersive software application that uses the entire region of the display. For example, when three software applications are displayed through the display of the electronic device 101, the processor 120 may identify the number of software applications as three. The three software applications may be referred to as a widget type of software applications using a partial region of the display. In operation 301, when the processor 120 identifies the number of software applications as one, it may perform operation 303. In operation 301, when the processor 120 identifies the number of software applications as two or more (i.e., a plural number), it may then perform operation 305.

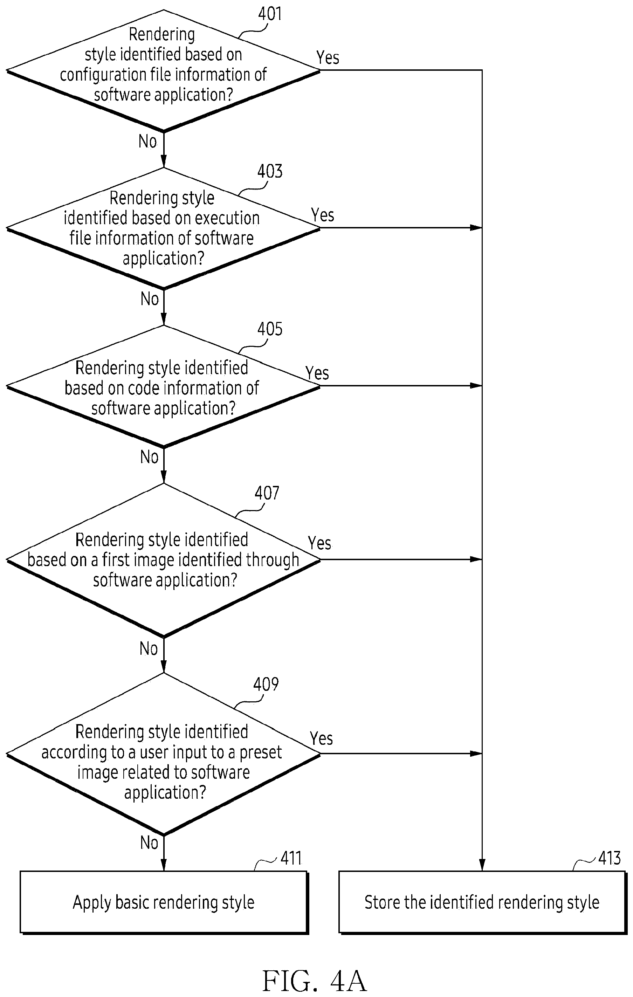

In operation 303, the processor 120 may obtain information on a rendering style of one software application. Here, the information on the rendering style may indicate a rendering style that is applied to the software application. The rendering style that is applied to the software application may also be referred to as a rendering style defined by the software application. For example, the information on the rendering style may be identified based on file information or code information of the software application. More specific content related thereto will be described with reference to FIG. 4A below. The rendering style may include various types of styles. For example, the rendering style may include a cartoon style, a physical based rendering (PBR) style, a black/white style, a outline style, a voxel style, a comic style, or a retro style. However, the disclosure is not limited thereto, and any other rendering styles may also be applied to embodiments of the disclosure.

In operation 305, the processor 120 may obtain information on a rendering style of each of a plurality of software applications. Here, the information on the rendering style may indicate a rendering style that is applied to a software application. In other words, the processor 120 may obtain information on a plurality of rendering styles corresponding to the plurality of software applications. For example, information on each rendering style may be identified based on file information or code information of a software application. More specific content related thereto will be described referring to FIG. 4A below. Further, in operation 305, the processor 120 may obtain boundary information for each of the plurality of software applications. For example, the boundary information may indicate information on a region of each software application displayed on the display of the electronic device 101. The processor 120 may map information on a rendering style that is applied to each of the divided regions, based on the boundary information. Further, the processor 120 may store information on the rendering style that is applied to each of the divided regions, in the memory (e.g., memory 130 of FIG. 1).

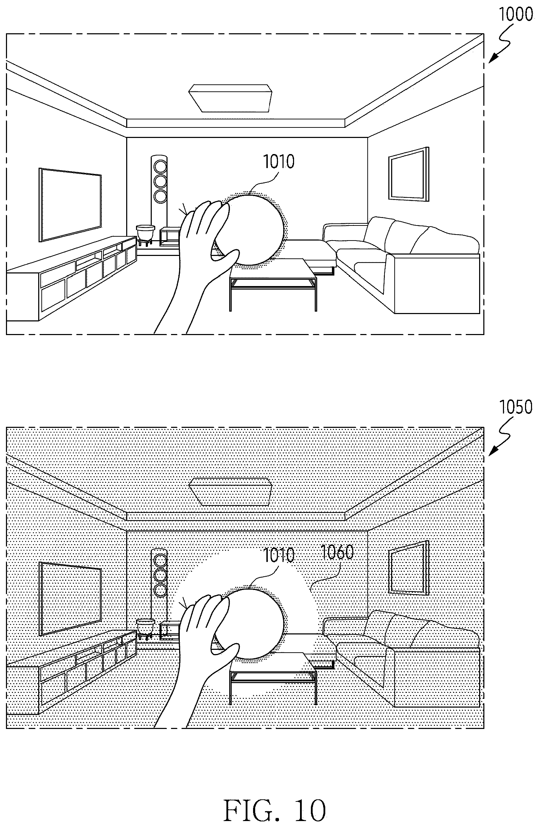

In operation 307, the processor 120 may identify a first image through a software application. For example, the first image may refer to a VR or AR image provided by the electronic device 101 to a user through the software application. For example, the first image may include the VR image 203 of FIG. 2C. According to an embodiment, the first image is an image for a VR or AR environment provided through the software application, and may include at least one visual object. For example, the at least one visual object may include a light emitting attribute, as shown in FIG. 10.

According to an embodiment, the processor 120 may identify a plurality of first images through one software application. For example, the processor 120 may identify n first images at m second intervals. For example, the processor 120 may obtain a plurality of first images displayed through a software application. Further, the processor 120 may identify a plurality of first images for each of a plurality of software applications. For example, the processor 120 may identify a first set of a plurality of first images through a first software application included in a plurality of software applications. Further, the processor 120 may identify a second set of a plurality of first images through a second software application included in a plurality of software applications. Here, a respective set of the plurality of first images may represent a set of the same first images identified at different times.

According to the above description, the processor 120 may identify at least one first image for a software application. Further, the processor 120 may store the identified at least one first image in a memory (for example, the memory 130 of FIG. 1).

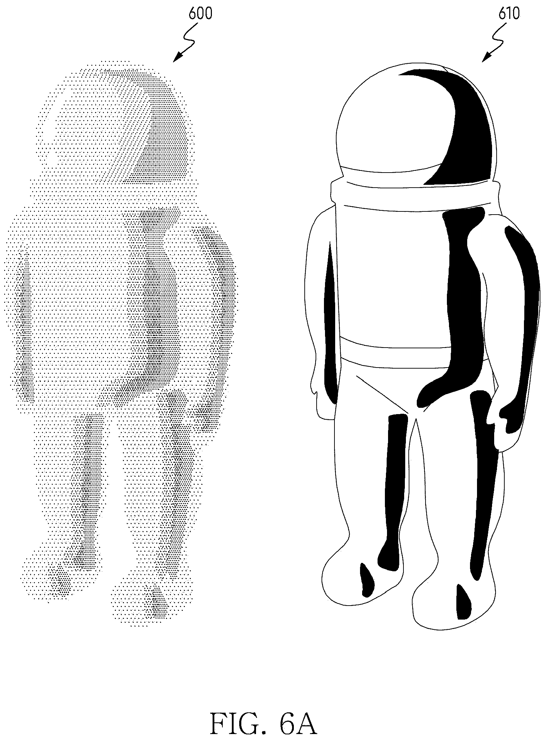

In operation 309, the processor 120 may identify a color effect to be applied to the background image, based on the attribute of the visual object in the first image. The processor 120 may identify a color effect to be applied to a portion of the background image corresponding to the visual object. The attribute may include, for example, light-emission attributes, temperature attributes, texture attributes, and the like expressed by the visual object. For example, when some of the visual objects in the first image are a virtual light source, it may be understood that the visual objects have light-emission attributes. The background image may represent an image synthesized with the first image and serving as a background of the first image. The background image may represent an image of a surrounding environment (e.g., a real-world environment image or a second image) of the wearable electronic device or a third image with a rendering style applied, including the same visual object as the second image. The background image to be applied with a color effect may be a second image, and the background image to which the color effect was applied may be a third image. The color effect may include, for example, the number of colors, histogram, the presence or absence of outlines, the size of pixels having the same color, shadow color, contrast, sharpening, blurring, masking or the like. For example, the color effect may be set in consideration of position of a virtual light source having light-emission properties included in the first image, brightness of the virtual light source, color temperature of the virtual light source, brightness of ambient light or the like. Details of the color effect will be described in greater detail with reference to FIGS. 6A to 6C below.

In operation 311, the processor 120 may identify a rendering style based on the first image. For example, the processor 120 may identify the rendering style of the software application based on the visual object included in the first image. According to an embodiment, when the processor 120 identifies a plurality of first images, the processor 120 may identify the rendering style of the software application, based on the plurality of first images. For example, the processor 120 may identify the rendering style that is applied to the first image, using manifest file, execution file information, code information, deep learning, histogram, or image information of the software application. According to the above description, the processor 120 may identify at least one first image for the software application and, based on the identified at least one first image, identify the rendering style for the software application. In case that information on the rendering style is identified through information on the software application, through the operation 301 to the operation 305, then the operation 311 may be omitted. More specific content related thereto will be described with reference to FIG. 4A below.

In operation 313, the processor 120 may convert the second image to obtain a third image. For example, the second image may represent an image of a surrounding environment of the electronic device 101. That is, the second image may represent an image of a real-world environment that may be identified with the camera (e.g., the camera module 180 of FIG. 1) of the electronic device 101. Here, the camera may include a pass-through camera.

According to an embodiment, the processor 120 may obtain a second image, which is an image of a real-world environment, through the camera. For example, the processor 120 may obtain a second image of a real-world environment in a direction viewed by the user with respect to the surrounding environment. The processor 120 may obtain information on the surrounding environment to obtain the second image. For example, the information on the surrounding environment may include, for example, color temperature of an environmental light source, brightness of the environmental light source, fog information or the like. The environmental light source may exist a real-world environment, and may represent a light source related to the second image. As such, the processor 120 may obtain the second image based on the information on the surrounding environment.

According to an embodiment, the processor 120 may convert the second image into a third image based on the color effect and the rendering style. For example, the processor 120 may convert the second image of a real-world environment into the third image, based on a color effect for a VR environment provided through a software application and a rendering style of the software application. According to an embodiment, when a plurality of software applications are used, the processor 120 may identify a region of each of the plurality of software applications based on the boundary information, and identify the third image to which the rendering style of the second image is applied for the identified area. Here, the third image may be used as a background image for the first image. As described above, the third image may be changed to a style identical or similar to the first image.

In operation 315, the processor 120 may display the first image and the third image. For example, the processor 120 may synthesize and display the first image and the third image through the display of the electronic device 101. For example, the processor 120 may display the third image together with the first image through the display of the electronic device 101.

As described above, embodiments of the disclosure may obtain an image (e.g., a third image) with a rendering style that is applied to an image of a real-world environment (e.g., a second image), and provide the user with an image obtained by synthesizing the obtained third image and an image of a VR environment (e.g., a first image) obtained through a software application. The rendering style may be identified from information on the software application or from the first image. Embodiments of the disclosure do not simply synthesize the second image and the first image as it is, but may synthesize and display the first image and the third image to which a rendering style related to the first image is applied. As such, the electronic device 101 may provide a highly immersive VR environment through an image more naturally rendered to a user.

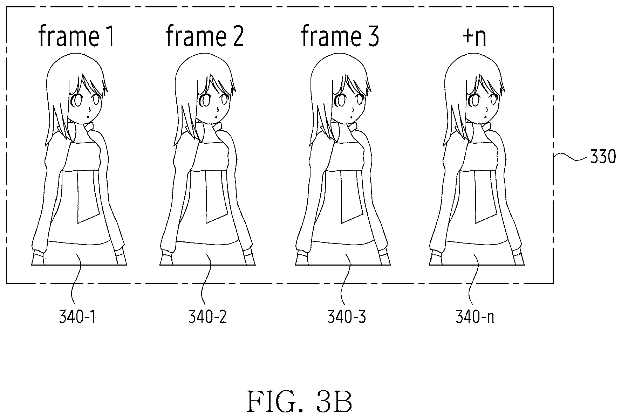

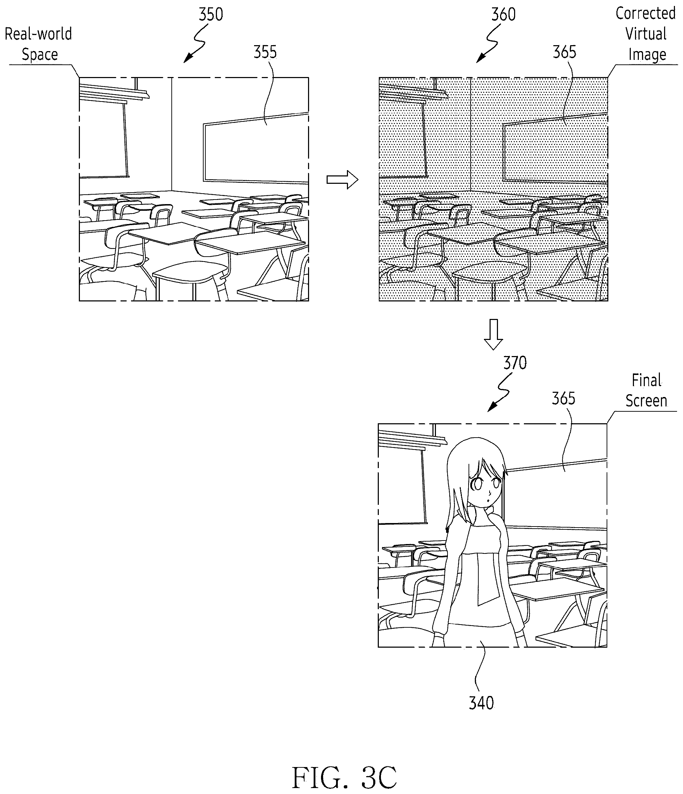

FIG. 3B illustrates an example of obtaining information on a rendering style through a plurality of images according to an embodiment of the disclosure. FIG. 3C illustrates an example of obtaining a synthesized image based on information on a rendering style according to an embodiment of the disclosure.

The rendering style may represent a style that is applied upon rendering a two-dimensional or three-dimensional scene as an image. The synthesized image may represent a synthesized image of an image obtained through a software application providing a VR environment and an image of an environment around the wearable electronic device. The wearable electronic device may be the electronic device 101 of FIGS. 1, 2A, and 2B for providing a VR or AR environment to a user. Hereinafter, for convenience of explanation, the wearable electronic device for providing a VR environment will be described as an example. However, the disclosure is not limited thereto.

Referring to FIG. 3B, the processor 120 may obtain a first image through a software application. In the example 330 of FIG. 3B, for convenience of explanation, a plurality of first images 340-1, 340-2, 340-3, and 340-n of one software application are illustrated. However, the disclosure is not limited thereto. For example, the processor 120 may obtain a single first image through the software application. Alternatively, the processor 120 may obtain a plurality of first images through the software application. According to an embodiment, when using a plurality of software applications, the processor 120 may obtain at least one first image for each of the plurality of software applications. For example, the processor 120 may obtain at least one first image displayed through the software application.

According to an embodiment, each of the plurality of first images 340-1, 340-2, 340-3, and 340-n may include the same visual object. For example, each of the plurality of first images 340-1, 340-2, 340-3, and 340-n may include a visual object that is a cartoon character. The plurality of first images 340-1, 340-2, 340-3, and 340-n may represent images including the same visual object over time.

Although not shown in FIG. 3B, the processor 120 may identify a rendering style of the software application based on the plurality of first images 340-1, 340-2, 340-3, and 340-n of the first example 330. For example, the processor 120 may identify the rendering style of the software application, using deep learning according to an artificial neural network. For an example of a plurality of first images 340-1, 340-2, 340-3, and 340-n including the visual object that is a cartoon character, the processor 120 may identify that the rendering style of the software application is a cartoon style.

Referring to FIG. 3C, in a second example 350, the processor 120 may obtain a second image 355 of a real-world environment through the camera of the electronic device 101. For example, the processor 120 may obtain the second image 355 of a real-world environment in a direction viewed by the user with respect to the surrounding environment. Further, in order to obtain the second image 355, the processor 120 may obtain information on the surrounding environment. For example, the information on the surrounding environment may include, for example, color temperature of an environmental light source, brightness of the environmental light source, or fog information. The environmental light source may exist in a real-world environment, and may represent a light source related to the second image 355. Accordingly, the processor 120 may obtain the second image 355 based on the information on the surrounding environment.

Referring to FIG. 3C, in the third example 360, the processor 120 may convert the second image 355 into a third image 365 based on the color effect and the rendering style. In other words, the processor 120 may obtain the third image 365, which is a corrected virtual image, by applying the rendering style to the second image 355 for a real-world space. For example, the processor 120 may convert the second image 355 of the real-world environment into the third image 365, based on the color effect for the VR environment provided through the software application and the rendering style of the software application. The color effect may be identified based on the plurality of first images 340-1, 340-2, 340-3, and 340-n of FIG. 3B. The color effect may include, for example, the number of colors, histogram, the presence or absence of a outline, the size of pixels having the same color, shadow color, contrast, sharpening, blurring, masking or the like. For example, the color effect may be set, for example, in consideration of the location of a virtual light source with light-emission properties included in the first image, the brightness of the virtual light source, the color temperature of the virtual light source, or the brightness of ambient light.

The rendering style may be identified based on information on the software application, may be identified based on the plurality of first images 340-1, 340-2, 340-3, and 340-n, or may be identified according to a user's input. More specific content related thereto will be described referring to FIG. 4A below. The rendering style may include various formats of styles. For example, the rendering style may include a cartoon style, a physical based rendering (PBR) style, a black/white style, a outline style, a voxel style, a comic style, a retro style or the like. In the third example 360 of FIG. 3C, illustrated is a case where the rendering style is a cartoon style.

Referring to the third example 360, the processor 120 may obtain the third image 365 by applying a cartoon-style rendering style and color effects to the second image 355. In other words, the third image 365 may change the second image 355 to a cartoon style and represent an image to which a shader is applied based on a color effect.

Referring to FIG. 3C, in the fourth example 370, the processor 120 may display the first image 340 and the third image 365. For example, the processor 120 may synthesize and display the first image 340 and the third image 365 through the display of the electronic device 101. For example, the processor 120 may display the third image 365 together with the first image 340 through the display of the electronic device 101.

According to the above description, embodiments of the disclosure may obtain an image (e.g., the third image 365) in which a rendering style is applied to an image of a real-world environment (e.g., the second image 355), and provide the user with an image obtained by synthesizing the obtained third image 365 and the image of a VR environment (e.g., the first image 340) obtained through the software application. The rendering style may be identified from information on a software application or from the first image. Embodiments of the disclosure do not synthesize the second image 355 and the first image 340 as it is, but may synthesize and display the third image 365 to which a rendering style related to the first image 340 is applied and the first image 340. As such, the electronic device 101 may provide the user with more immersive VR environment through an image that is more naturally rendered.

FIG. 4A is a flowchart illustrating an example of a method of obtaining information on a rendering style according to an embodiment of the disclosure.

The rendering style may represent a style that is applied upon rendering a two-dimensional or three-dimensional scene as an image. The synthesized image may represent a synthesized image of the image obtained through a software application providing a VR environment and the image of an environment around the wearable electronic device. The wearable electronic device may be the electronic device 101 of FIGS. 1, 2A, and 2B for providing a VR or AR environment to a user. Hereinafter, for convenience of explanation, the wearable electronic device for providing a VR environment will be described as an example. However, the disclosure is not limited thereto.

The flowchart of FIG. 4A may be performed by the electronic device 101 of FIGS. 1, 2A, and 2B. For example, operations of the flowchart of FIG. 4A may be performed by the processor 120 of the electronic device 101 of FIGS. 1, 2A, and 2B.

Referring to FIG. 4A, in operation 401, the processor 120 may identify a rendering style based on configuration file information of a software application. For example, the processor 120 may identify a rendering style based on a manifest file of the software application. The manifest file may refer to a file that defines components configuring the software application, defines a name of a package of the software application, defines a request for authority of the software application, or define device compatibility of the software application. As described above, the processor 120 may read the manifest file of the software application and identify the rendering style based on the manifest file. In operation 401, when the processor 120 does not identify the rendering style, operation 403 may be performed. In operation 401, when the processor 120 identifies the rendering style, the processor 120 may store the rendering style identified in operation 413 in the memory (e.g., the memory 130 of FIG. 1).

In operation 403, the processor 120 may identify the rendering style based on the execution file information of the software application. For example, the processor 120 may identify the rendering style based on comparing the title, file name, and package name of an executable file of the software application with information in the server. Here, the server information may include a database uploaded to the server. As described above, the processor 120 may search for the rendering style of the software application in the database of the server, based on the execution file information of the software application. Accordingly, the processor 120 may identify the rendering style of the software application. In operation 403, when the processor 120 cannot identify the rendering style, it may perform operation 405. In operation 403, when the processor 120 identifies the rendering style, the processor 120 may store the rendering style identified in operation 413 in the memory (e.g., the memory 130 of FIG. 1).

In operation 405, the processor 120 may identify the rendering style based on code information of the software application. For example, the processor 120 may identify code information on a rendering style included in code information of a software application. Here, the code information on the rendering style may include string data. Further, the code information on the rendering style may also be referred to as code information indicating shader. As described above, the processor 120 may search for the rendering style of the software application in the database of the server, based on the code information of the software application. Accordingly, the processor 120 may identify the rendering style of the software application. In operation 405, when the processor 120 does not identify the rendering style, operation 407 may be performed. In operation 405, when the processor 120 identifies the rendering style, the rendering style identified in operation 413 may be stored in the memory (e.g., the memory 130 of FIG. 1).

In operation 407, the processor 120 may identify the rendering style based on the first image identified through the software application. For example, the first image may refer to a VR or AR image provided by the electronic device 101 to the user through the software application. For example, the first image may include the VR image 203 of FIG. 2C. For example, the first image is an image of a VR or AR environment provided through the software application and may include at least one visual object. The processor 120 may identify a rendering style of the identified first image, using deep learning, a histogram, or image information. In FIG. 4A, one first image is described as an example, but the disclosure is not limited thereto. For example, the processor 120 may identify a rendering style for a plurality of first images for one software application. Alternatively, the processor 120 may identify a rendering style for at least one first image for each of a plurality of software applications. In operation 407, when processor 120 does not identify the rendering style, operation 409 may be performed. In operation 407, when processor 120 identifies the rendering style, the rendering style identified in operation 413 may be stored in the memory (e.g., memory 130 of FIG. 1).

In operation 409, the processor 120 may display a preset image related to the software application to the user and identify a rendering style according to a user input. For example, the preset image related to the software application may include an image in which various rendering styles are applied to the first image. The various rendering styles, for the first image obtained according to a rendering result of the software application may represent a style related to the rendering style identified according to the rendering result. The processor 120 may display the preset image on the display of the electronic device 101. The processor 120 may identify the selected preset image based on identifying reception of an input of users for the displayed preset image. Accordingly, the processor 120 may identify the rendering style for the preset image as the rendering style of the software application. In operation 409, when the processor 120 does not identify the rendering style, operation 411 may be performed. In operation 409, when the processor 120 identifies the rendering style, the rendering style identified in operation 413 may be stored in the memory (e.g., the memory 130 of FIG. 1).

In operation 411, the processor 120 may identify that the rendering style related to the software application is not applied to an image of a real-world environment (e.g., the second image). Accordingly, the processor 120 may apply a basic rendering style to the second image. The basic rendering style may be stored in advance by a user.

In operation 413, the processor 120 may store the identified rendering style. Further, the processor 120 may convert the second image into the third image based on the stored rendering style.

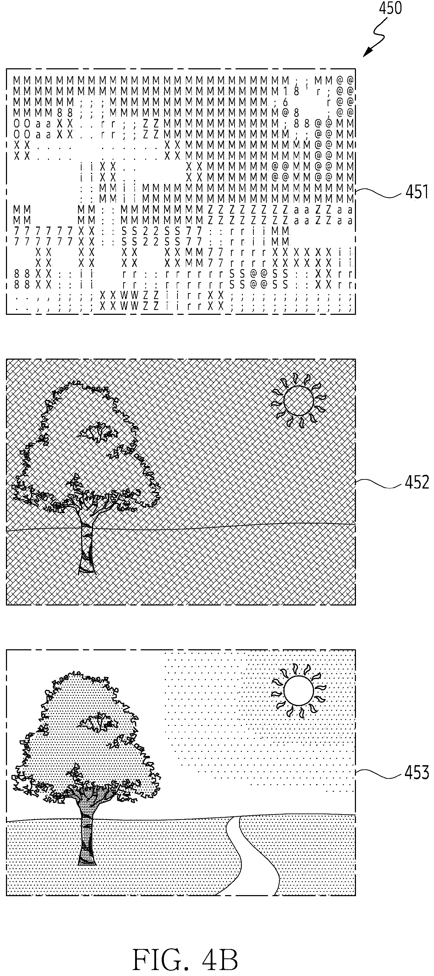

FIG. 4B illustrates an example of providing a user with a preset for a rendering style according to an embodiment of the disclosure.

The rendering style may represent a style that is applied in rendering a two-dimensional or three-dimensional scene as an image. The synthesized image may represent a synthesized image of an image obtained through a software application providing a VR environment and an image of an environment around the wearable electronic device. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto.

FIG. 4B illustrates preset images 450 displayed to the user through the display of the electronic device 101. The preset images 450 of FIG. 4B may represent an example of a preset image presented in operation 409 of FIG. 4A. For example, the preset images 450 may represent images in which various rendering styles are applied to the first image. In the example of FIG. 4B, the first image may be an image including visual objects such as e.g., tree, sun, hill, and road. In the process of obtaining the first image, the electronic device 101 may obtain a rendering result of the software application related to the first image. For example, the rendering result for obtaining the first image may include a pencil style. Accordingly, the preset images 450 may be determined based on the pencil style.

The preset images 450 may include preset images to which various rendering styles are applied. For example, the preset images 450 may include a first preset image 451, a second preset image 452, and a third preset image 453. For example, the first preset image 451 may be an image to which a style of displaying the first image as a plurality of letters is applied. Further, the second preset image 452 may be an image in which a pencil style is applied to the first image. Further, the third preset image 453 may be an image in which a cartoon style is applied to the first image.

According to an embodiment, the processor 120 may display the preset images 450 on the display. The processor 120 may receive a user's input to one of the preset images 450 and identify a preset image corresponding to the received user's input. Accordingly, the processor 120 may identify the rendering style of the software application.

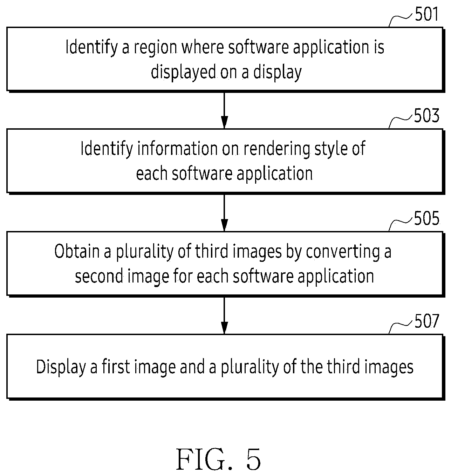

FIG. 5 is a flowchart illustrating an example of a method for obtaining a synthesized image based on information on a rendering style in a plurality of software applications according to an embodiment of the disclosure.

The rendering style may represent a style that is applied in rendering a two-dimensional or three-dimensional scene as an image. The synthesized image may represent a synthesized image of an image obtained through a software application providing a VR environment and an image of an environment around the wearable electronic device. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto.

The flowchart of FIG. 5 may be performed by the electronic device 101 of FIGS. 1, 2A, and 2B. For example, the flowchart of FIG. 5 may be performed by the processor 120 of the electronic device 101 of FIGS. 1, 2A, and 2B.

Referring to FIG. 5, in operation 501, the processor 120 may identify a region where the software application is displayed on the display. For example, the processor 120 may identify a region in which each software application among a plurality of software applications is displayed through the display of the electronic device 101. For example, it is assumed that the plurality of software applications includes a first software application, a second software application, and a third software application. In the entire region of the display of the electronic device 101, the processor 120 may identify a first region for the first software application, a second region for the second software application, and a third region for the third software application. In such a case, the processor 120 may identify the area based on boundary information of the software application.

In operation 503, the processor 120 may identify information on a rendering style of each software application. For example, the processor 120 may identify information on a rendering style of each software application, based on operations included in the flowchart of FIG. 4A. For example, the processor 120 may identify a first rendering style of the first software application. The processor 120 may identify a second rendering style of the second software application. The processor 120 may identify a third rendering style of the third software application. Here, the first rendering style, the second rendering style, and the third rendering style may be the same, different, or partially the same as or from each other.

In operation 505, the processor 120 may obtain a plurality of third images by converting the second image for each software application. For example, the processor 120 may obtain the third image, by converting the second image by applying a first rendering style to the first region, the second image being an image of a surrounding environment of the electronic device 101. The processor 120 may obtain the third image, by converting the second image by applying a second rendering style to the second region, the second image being an image of a surrounding environment of the electronic device 101. The processor 120 may obtain the third image, by converting the second image by applying a third rendering style to the third region, the second image being an image of a surrounding environment of the electronic device 101.

In operation 507, the processor 120 may display the first image and a plurality of the third images. For example, the processor 120 may synthesize and display the first image and the plurality of third images through the display of the electronic device 101. For example, the processor 120 may display the plurality of third images together with the first image through the display of the electronic device 101. For example, the processor 120 may display the third image synthesized together with the first image through the display of the electronic device 101.

According to an embodiment, the synthesized third image may represent one image in which the plurality of third images are synthesized. For example, the synthesized third image may represent an image obtained by synthesizing the plurality of third images corresponding to the areas identified in operation 501. The areas may be identified based on boundary information of each of a plurality of software applications. According to an embodiment, the processor may identify the areas such that there is no spacing between the areas in order to minimize a sense of heterogeneity between the plurality of software applications. Alternatively, when there is a spacing between those areas, the processor may convert a spaced portion based on the information on the rendering style identified from the plurality of software applications. For example, in case that the spaced portion is a portion between the first region of the first software application and the second region of the second software application, a rendering style for the spaced portion may be applied based on information on the rendering style included in both the first and second software applications or a similar rendering style thereto.

As described above, embodiments of the disclosure may obtain images (e.g., a plurality of third images) to which a rendering style is applied to an image of a real-world environment (e.g., the second image), and provide a user with an image obtained by combining the obtained plurality of third images and an image of a VR environment (e.g., the first image) obtained through a software application. The rendering style may be identified from information on a software application or the first image. Embodiments of the disclosure do not synthesize the first image and the second image as it is, but may synthesize the first image and the plurality of third images to which a rendering style related to the first image is applied and display the synthesized image. Accordingly, the electronic device 101 may provide a user with a high immersive VR environment through more naturally rendered images.

FIGS. 6A to 6C illustrate examples of images with a changed rendering style according to an embodiment of the disclosure. The rendering style may represent a style that is applied in rendering a two-dimensional or three-dimensional scene as an image.

Referring to FIG. 6A, the first example 600 illustrates an image including a visual object in 3D (dimensional). In contrast, the image of the second example 610 illustrates an image in which a rendering style (e.g., a cartoon style) is applied to the image of the first example 600. For example, in the image of the second example 610, the colors used may be simplified compared to the first example 600. That is to say, for the image of the second example 610, a less number of colors may be used compared to the first example 600. For example, the image of the second example 610 may directly display outlines of the visual object compared to the first example 600. Further, compared to the first example 600, the image of the second example 610 may be represented in a more simplified shadow step. By applying the above-described effects, a cartoon-style of rendering style may be applied to the image. As such, an image with such a cartoon style that is applied may provide a cartoon-like experience to the user.

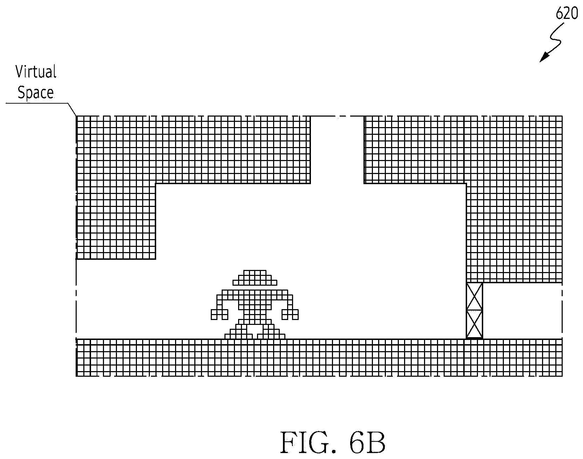

Referring to FIG. 6B, the third example 620 illustrates an image with a retro-style of rendering style applied. For example, the image of the third example 620 may be represented by reducing the resolution of the pixels by a factor of n, such that the visual object appears to be composed of pixels. Further, the colors used in the image of the third example 620 may be simplified. Furthermore, in the image of the third example 620, a color map of histogram may be utilized such as e.g., a 3D image. As such, such an image with a retro style that is applied may provide the user with a classical feeling of experience.

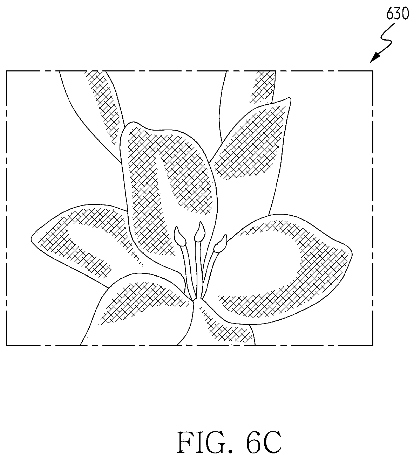

Referring to FIG. 6C, the fourth example 630 illustrates an image with a pencil-style of rendering style applied. For example, in the image of the fourth example 630, the outline of the visual object may be displayed in black. Further, the image of the fourth example 630 may be displayed with short straight lines connecting points included in the visual object. As such, the image with such a pencil style being applied may provide the user with a drawing feeling of experience.

Referring to FIGS. 6A to 6C, the image may be changed based on a color effect. The color effect may include the number of colors, histogram, the presence or absence of the outline, the size of pixels having the same color, shadow color, contrast, sharpening, blurring, masking and so on. The image may be changed by changing the number of colors. The image may be changed, for example, by changing a 16-bit or 32-bit color to an 8-bit color. The image may also be changed by using a histogram. The image may be changed, for example, by using a camera image color and a histogram of a 3D rendering image. Further, the image may be changed according to the presence or absence of a outline. Further, when a plurality of pixels have the same color, the image may be changed by changing the number of pixels. Further, the image may be changed by changing a shadow processing level. The image may be changed, for example, by simplifying the shadow color by stepwise. Further, the image may be changed by adjusting the contrast to apply sharpening thereto. Furthermore, the image may be changed by blurring the image. In addition, the image may be changed by making the image clear using masking. The rendering style of the image may be identified based on a combination of the above color effects. For example, the cartoon style of rendering style of FIG. 6A may represent a style that has a less number of colors applied, draws outlines directly, and simplifies the level of shading.

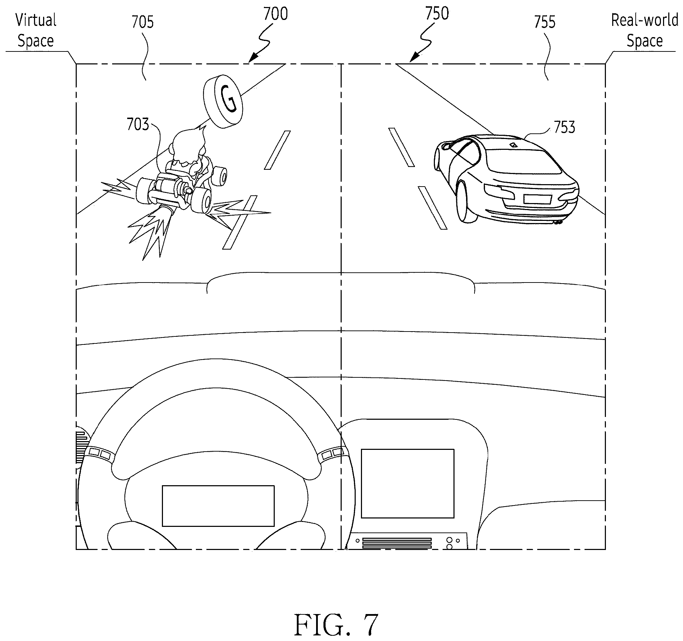

FIG. 7 illustrates another example of obtaining a synthesized image based on information on a rendering style according to an embodiment of the disclosure.

The rendering style may represent a style that is applied in rendering a two-dimensional or three-dimensional scene as an image. The synthesized image may represent a synthesized image of an image obtained through a software application providing a VR environment and an image of an environment around the wearable electronic device. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto.

FIG. 7 illustrates an example of converting the VR image 203 to be similar to the real-world environment image 205-2, rather than converting the real-world environment image 205-2, which is a background image, into the image 205-1, as illustrated with reference to FIG. 2C.

Referring to FIG. 7, the first example 700 shows an image of a VR environment (e.g., a game), and the second example 750 shows an image of a real-world environment. Referring to the first example 700, the image may include a visual object 703 and a background image 705. Here, the visual object 703 may include a vehicle. A rendering style such as a game screen may be applied to the image of the first example 700. According to an embodiment, referring to the second example 750, the processor 120 may obtain a new visual object 753 applying a rendering style to the visual object 703. For example, the processor 120 may identify a rendering style for the image 755 of the real-world environment, and apply the identified rendering style to the visual object 703 of the first example 700. As such, the processor 120 may obtain the visual object 753 with the rendering style applied. Then, the processor 120 may synthesize the visual object 753 and the image 755 of the real-world environment, and the synthesized image may be provided to the user through a display of the electronic device 101. In such a circumstance, identifying the rendering style for the image 755 of the real-world environment may be performed by analyzing the obtained image 755 of the real-world environment, as shown in operation 311 of FIG. 3A or operation 407 of FIG. 4A

Accordingly, embodiments of the disclosure may obtain an image with a changed rendering style, by identifying the rendering style of the image 755 of the real-world environment and applying the identified rendering style to the visual object 703 of the image of the VR environment, as in the second example 750. In doing so, embodiments of the disclosure may synthesize an image of a real-world environment and a VR image with substantially the same rendering style as the real-world environment and present the synthesized image to the user, thereby enabling the user to enjoy a more natural and high immersive VR experience.

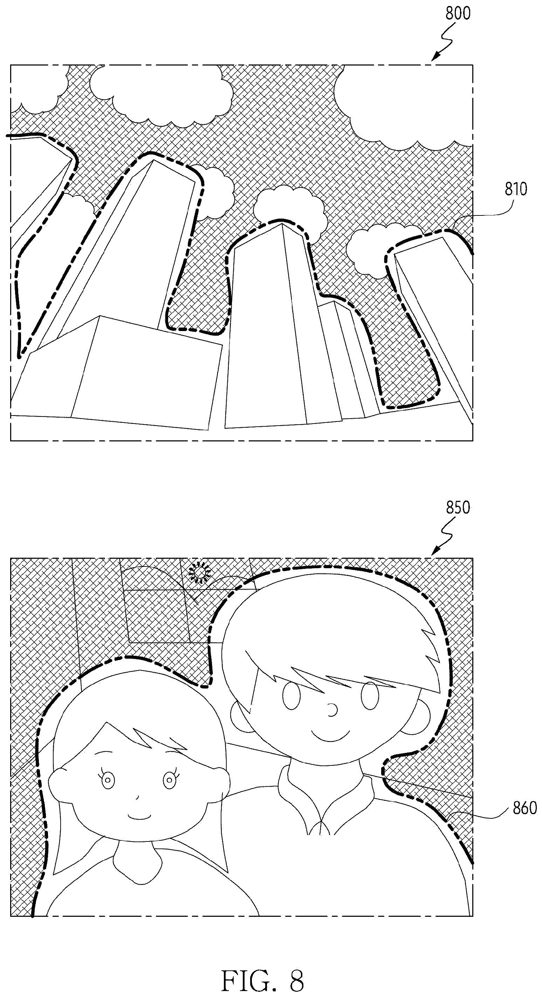

FIG. 8 illustrates an example of obtaining a synthesized image with a partial region changed based on information on a rendering style according to an embodiment of the disclosure.

The rendering style may represent a style that is applied in rendering a two-dimensional or three-dimensional scene as an image. The synthesized image may represent an image of synthesizing an image obtained through a software application providing a VR environment and an image of an environment around the wearable electronic device. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto.

FIG. 8 illustrates a first example 800 and a second example 850 in which a rendering style is applied only to a partial region of an image. The first example 800 illustrates an image in which a rendering style is applied to only the first region 810 for an image of a real-world environment. Here, the first region 810 may represent a sky area included in the real-world environment. For example, the rendering style that is applied to the first region 810 may be a cartoon style. According to an embodiment, the processor 120 may identify a user's input to the first region 810, and according to the identification, may separate the first region 810 from the image. Then, the processor 120 may obtain an image in which the identified rendering style is applied to the first region 810, and may obtain a synthesized image by synthesizing the obtained image for the first region 810 with the image of the actual environment.

In the second example 850, an image in which a rendering style is applied only to the second region 860 for an image of a real-world environment including a plurality of people is illustrated. Here, the second region 860 may represent a human area included in the real-world environment. For example, the rendering style that is applied to the second region 860 may be a cartoon style. According to an embodiment, the processor 120 may identify a user's input to the second region 860 and according to the identification, may separate the second region 860 from the image. Then, the processor 120 may obtain an image in which the identified rendering style is applied to the second region 860, and may obtain a synthesized image by combining the obtained image for the second region 860 with the image of the actual environment.

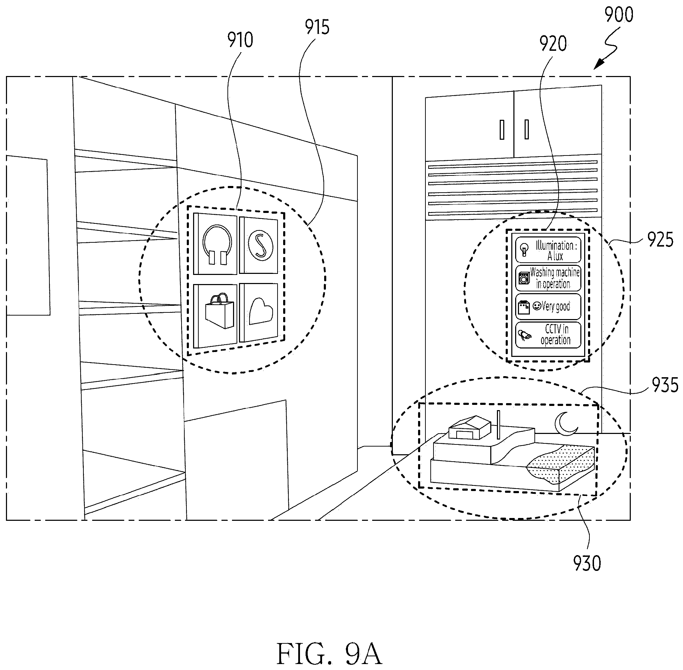

FIGS. 9A to 9C illustrate examples of obtaining a synthesized image based on information on a rendering style in a plurality of software applications according to an embodiment of the disclosure.

The rendering style may represent a style that is applied in rendering a two-dimensional or three-dimensional scene as an image. The wearable electronic device may be the electronic device 101 of FIGS. 1, 2A, and 2B for providing a VR or AR environment to a user. Hereinafter, for convenience of explanation, the wearable electronic device for providing a VR environment will be described as an example. However, the disclosure is not limited thereto.

FIGS. 9A to 9C illustrate an example of the electronic device 101 using a plurality of software applications. Referring to FIG. 9A, a first example 900 illustrates an example of executing three software applications. In the first example 900, the processor 120 may execute the first software application 910, the second software application 920, and the third software application 930. In addition to an image of a real-world environment, the processor 120 may display, on a display, a first image for a first software application 910, a first image for a second software application 920, and a first image for a third software application 930. The processor 120 may identify a region of the first image for each software application. For example, the processor 120 may identify the first region 915 for the first software application 910. For example, the processor 120 may identify a second region 925 for the second software application 920. For example, the processor 120 may identify a third region 935 for the third software application 930. In this case, the first region 915 may also be referred to as a first rendering style region. The second region 925 may also be referred to as a second rendering style region. The third region 935 may also be referred to as a third rendering style region.

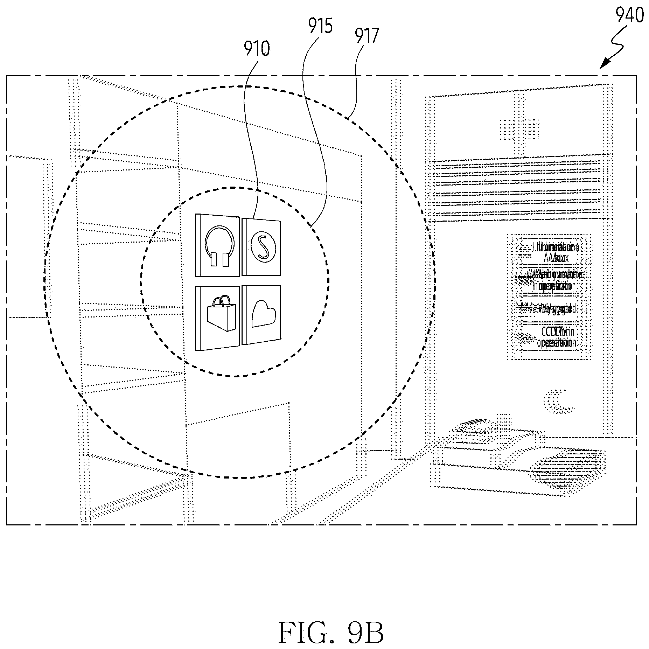

Referring to FIG. 9B, a second example 940 illustrates an example of applying a rendering style to a peripheral region of a software application. According to an embodiment, the processor 120 may identify a region of an image for each software application. For example, the processor 120 may identify a first region 915 where the first software application 910 is located on the display of the electronic device 101. Further, the processor 120 may identify a first peripheral region 917 including the first region 915 around the first region 915. Here, the first peripheral region 917 may indicate a region to which a rendering style that is applied to the first software application 910 of the first region 915 may be applied. The size of the first peripheral region 917 may be identified based on the importance, size, or user's interest of the first software application 910. For example, when the size of the first software application 910 is physically relatively large, the first peripheral region 917 may also be widened. For example, the higher the importance of the first software application 910, the wider the first peripheral region 917.

According to an embodiment, the first software application 910 may be visually emphasized and displayed compared to an image of a real-world environment. For example, the first region 915 of the first software application 910 may be visually emphasized and displayed compared to an image of a real-world environment. For example, the processor 120 may apply a filtering style of rendering style to a region other than the first region 915. In such a case, the processor 120 may apply a relatively weak filtering style of rendering style to the area other than the first region 915 or a region within the first peripheral region 917. Accordingly, the user may more effectively identify the first software application 910. For convenience of explanation, FIG. 9B shows application of a rendering style for emphasizing one software application (e.g., the first software application 910) but the disclosure is not limited thereto. The disclosure may include application of a rendering style for emphasizing a plurality of software applications.

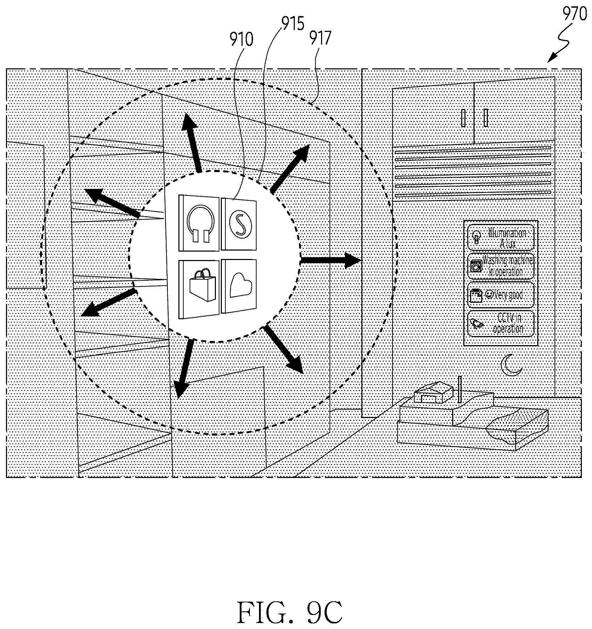

Referring to FIG. 9C, a third example 970 illustrates an example of applying a rendering style to a region other than some software applications used by the user among the three software applications. In the third example 970, it is assumed that the user of the electronic device 101 uses the first software application 910. According to an embodiment, the processor 120 may identify the first software application 910 used by the user. For example, the processor 120 may identify the first software application 910 on which the user is focusing for a specified time or longer, by tracking the user's gaze. In such a case, the processor 120 may identify the first region 915 of the first software application 910. For example, the specified time may be set in advance by the user or may be determined according to the type of the software application to be used. For example, when the software application requires the user's fast response speed, the specified time may be shortened.

According to an embodiment, a rendering style may be applied to the first region 915 of the first software application 910. For example, the processor 120 may apply the rendering style of the first software application 910 to the first region 915 of the first software application 910. Further, when the user gazes at the first software application 910 for the specified time or longer, the processor 120 may extend the area to which the rendering style is applied to the first peripheral region 917. Then, when identifying that the user gazes at the first software application 910 for another specified time or longer (e.g., longer than the aforementioned specified time), the processor 120 may apply the rendering style to the entire region displayed through the display.

As described above, the disclosure may obtain images (e.g., the plurality of third images) in which a rendering style is applied to an image of a real-world environment (e.g., a second image), and provide a user with an image obtained by synthesizing the obtained plurality of third images and an image of a VR environment (e.g., the first image) obtained through a software application. The rendering style may be identified from information on the software application or the first image. More specifically, not only the entire region of the second image may be applied, but also the rendering style may be applied to the area of the second image corresponding to the peripheral region of the first image obtained through the software application. Embodiments of the disclosure may not synthesize the second image and the first image as it is, but synthesize the plurality of third images to which a rendering style related to the first image is applied and the first image and display the synthesized image. Accordingly, the electronic device 101 may provide the user with a high immersive VR environment through a more naturally rendered image.

FIG. 10 illustrates an example of applying a rendering style based on a visual object having a light emitting attribute of a software application according to an embodiment of the disclosure.

The rendering style may represent a style that is applied in rendering a two-dimensional or three-dimensional scene as an image. The wearable electronic device may be the electronic device 101 of FIGS. 1, 2A, and 2B for providing a VR or AR environment to the user. Hereinafter, for convenience of explanation, the wearable electronic device for providing a VR environment will be described as an example. However, the disclosure is not limited thereto. For the light emitting attribute, it may be understood that some visual objects have the light emitting attribute, when some of the visual objects in the image (e.g., the first image) for the VR environment of the software application include a virtual light source. The light emitting attribute may be included in the attributes of the visual object. For example, the attributes may include a light emitting attribute, a temperature attribute, or a texture attribute.

FIG. 10 illustrates a first example 1000 showing a first image including a visual object 1010, which is a virtual light source, and a second image of a real-world environment, and a second example 1050 synthesizing the first image with a third image that applies a rendering style based on a visual object 1010, which is the virtual light source, to the second image.

Referring to the first example 1000, the processor 120 may identify a color effect to be applied to the background image, based on the light emitting attribute of the visual object of the first image. The first image may include a visual object 1010. The visual object may include a light emitting attribute. That is, the visual object may be a virtual light source. According to an embodiment, the processor 120 may obtain the first image including the visual object 1010 having the light emitting attribute, and identify the color effect from the obtained first image. For example, the color effect may include the number of colors, histogram, the presence or absence of a outline, the size of pixels having the same color, shadow color, contrast, sharpening, blurring, masking or the like. For example, the color effect may be set in consideration of the location of a virtual light source having the light emitting attribute included in the first image, the brightness of the virtual light source, the color temperature of the virtual light source, or the brightness of ambient light.

Referring to the second example 1050, the processor 120 may apply a rendering style to the second image based on a color effect obtained from the first image. For example, the processor 120 may apply the rendering style to a peripheral region 1060 of the visual object 1010. In this case, the applied rendering style may represent a rendering style that is applied by the visual object 1010 that is a virtual light source. For example, when the location of the visual object 1010 that is a virtual light source is changed, the peripheral region 1060 may change, and the processor 120 may apply the rendering style in consideration of the changed peripheral region 1060. In this case, as it approaches the location of the visual object 1010 that is a virtual light source, the rendering style may become brighter. Further, the processor 120 may adjust a color temperature of the rendering style in consideration of information on the color temperature of the visual object 1010 that is a virtual light source. Further, the processor 120 may adjust a brightness of the rendering style in consideration of information on the brightness of the visual object 1010 that is a virtual light source. Further, the processor 120 may equally adjust the brightness of ambient light in the first image and the brightness of ambient light in the second image. Here, the ambient light may represent light that illuminates all of the surroundings without a specific direction. In other words, the ambient light may represent light in which a light source exists but light emitted from the light source is reflected by a plurality of elements to get lost in its direction. As described above, the processor 120 may apply a rendering style based on the color effect identified based on the information on the visual object 1010 that is a virtual light source. The processor 120 may synthesize the first image including the visual object 1010 and the third image in which the rendering style is applied to the second image and display the same through the display.

Referring to FIGS. 1 to 10, the disclosure may obtain an image (e.g., a third image) in which a rendering style is applied to an image of a real-world environment (e.g., a second image), and provide the user with an image obtained by synthesizing the obtained third image and an image of a VR environment (e.g., a first image) through a software application. The rendering style may be identified from information on the software application or from the first image. Embodiments of the disclosure do not synthesize the second image and the first image as it is, but may synthesize the third image to which a rendering style related to the first image is applied and the first image to display the synthesized image. As such, the electronic device 101 may provide the user with a high immersive VR environment through a more naturally rendered image. Further, when a plurality of software applications are used, the disclosure may clearly indicate a boundary between the software applications, and thus an improved usability of the electronic device 101 by the user may be obtained. Furthermore, the disclosure may provide the user with a more natural VR (or AR) experience owing to an exchange of information between images of a real-world environment and images obtained from the software applications of the VR (or AR) environment.

As described above, a wearable electronic device 101 may include a camera 180. The wearable electronic device may include a display 160. The wearable electronic device 101 may include a processor 120. The processor 120 may be configured to identify a first image including a visual object through a software application. The processor 120 may be configured to, when the visual object in the first image has a luminescent property, identify a color effect to be applied to a background image based on the luminescent property. The processor 120 may be configured to identify a rendering style that is applied to the first image. The processor 120 may be configured to obtain a third image as the background image, by converting a second image, obtained through the camera, representing an environment around the wearable electronic device, based on the color effect and the rendering style. The processor 120 may be configured to display the first image together with the third image through the display. The property may include luminescent property, texture property, or temperature property. The rendering style may include a cartoon style, a retro style, an outline style, or a black and white style.

According to an embodiment, the processor 120 may be configured to identify a region where the software application is displayed through the display 160. The processor 120 may be configured to, in case that the region is an entire region of the display 160, obtain information on a rendering style of the software application.

According to an embodiment, the processor 120 may be configured to identify a region where each of a plurality of software applications including the software application and another software application is displayed through the display 160. The processor 120 may be configured to obtain first information on the rendering style of the software application for a first region where the software application is displayed with respect to an entire region of the display 160. The processor 120 may be configured to obtain second information on the rendering style of the another software application for a second region where the another software application is displayed with respect to the entire region of the display 160.

According to an embodiment, the processor 120 may be configured to obtain a fourth image based on the first information and the color effect with respect to the first region of the second image. The processor 120 may be configured to obtain a fifth image based on the second information and another color effect determined based on another visual object with another property in another first image obtained through the another software application with respect to the second region of the second image. The processor 120 may be configured to obtain the third image by synthesizing the fourth image and the fifth image.

According to an embodiment, the processor 120 may be configured to obtain first boundary information on the first region from the software application. The processor 120 may be configured to obtain second boundary information on the second region from the another software application.

According to an embodiment, the processor 120 may be configured to, based on identifying a region where a gaze of a user of the wearable electronic device is focusing, identify the software application from among the plurality of software applications. The processor 120 may be configured to identify a first rendering style region including the first region where the software application is displayed. The third image may be obtained by converting the second image based on the first information with respect to the first rendering style region of the second image.

According to an embodiment, the processor 120 may be configured to, in case that a time when the gaze is positioned within a region corresponding to the software application in the display 160 is greater than or equal to a specified time, identify an extended region with respect to the first rendering style region. The third image may be obtained by converting the second image based on the first information with respect to the extended region of the second image.

According to an embodiment, the processor 120 may be configured to obtain information on the rendering style based on manifest file information of the software application, obtain information on the rendering style based on execution file information of the software application, or obtain information on the rendering style based on code information indicating a shader of the software application.

According to an embodiment, the processor 120 may be configured to, in case that the processor 120 does not obtain information on the rendering style through the first image, the manifest file information, the execution file information, or the code information indicating the shader, display, through the display 160 to a user, a plurality of presets determined based on a rendering result of the software application. The processor 120 may be configured to, based on a response of a user for one preset of the plurality of presets, obtain the information on the rendering style of the software application.

According to an embodiment, the processor 120 may be configured to, based on an input of a user of the wearable electronic device, identify a partial region of the second image. The processor 120 may be configured to obtain the third image by converting the partial region of the second image based on information on the rendering style and the color effect.

As described above, a method performed by a wearable electronic device 101 may include identifying (307) a first image including a visual object through a software application. The method may include, based on a property of the visual object in the first image, identifying

(309) a color effect to be applied to a portion of a background image corresponding to the visual object. The method may include identifying (311) a rendering style that is applied to the first image. The method may include obtaining (313) a third image as the background image by converting a second image, obtained through a camera 180 of the wearable electronic device 101, representing an environment around the wearable electronic device, based on the color effect and the rendering style. The method may include displaying (315) the first image together with the third image through a display of the wearable electronic device. The property may include luminescent property, texture property, or temperature property. The rendering style may include a cartoon style, a retro style, an outline style, or a black and white style.

According to an embodiment, the method may include identifying a region where the software application is displayed through the display 160. The method may include, in case that the region is an entire region of the display 160, obtaining information on the rendering style of the software application.

According to an embodiment, the method may include identifying a region where each of a plurality of software applications including the software application and another software application is displayed through the display 160. The method may include obtaining first information on the rendering style of the software application for a first region where the software application is displayed with respect to an entire region of the display 160. The method may include obtaining second information on the rendering style of the another software application for a second region where the another software application is displayed with respect to the entire region of the display 160.

According to an embodiment, the method may include obtaining a fourth image based on the first information and the color effect with respect to the first region of the second image. The method may include obtaining a fifth image based on the second information and another color effect determined based on another visual object with another property in another first image obtained through the another software application with respect to the second region of the second image. The method may include obtaining the third image by synthesizing the fourth image and the fifth image.

According to an embodiment, the method may include obtaining first boundary information on the first region from the software application. The method may include obtaining second boundary information on the second region from the another software application.

According to an embodiment, the method may include, based on identifying a region where a gaze of a user of the wearable electronic device is focusing, identifying the software application from among the plurality of software applications. The method may include identifying a first rendering style region including the first region where the software application is displayed. The third image may be obtained by converting the second image based on the first information with respect to the first rendering style region of the second image.

According to an embodiment, the method may include, in case that a time when the gaze is positioned within a region corresponding to the software application in the display 160 is greater than or equal to a specified time, identifying an extended region with respect to the first rendering style region. The third image may be obtained by converting the second image based on the first information with respect to the extended region of the second image.

According to an embodiment, the method may include obtaining information on the rendering style based on manifest file information of the software application, obtaining information on the rendering style based on execution file information of the software application, or obtaining information on the rendering style based on code information indicating a shader of the software application.

According to an embodiment, the method may include, in case of not obtaining information on the rendering style through the first image, the manifest file information, the execution file information, or the code information indicating the shader, displaying, to a user, a plurality of presets determined based on a rendering result of the software application. The method may include, based on a response of a user for one preset of the plurality of presets, obtaining the information on the rendering style of the software application.

According to an embodiment, the method may include, based on an input of a user of the wearable electronic device 101, identifying a partial region of the second image. The method may include obtaining the third image by converting the partial region of the second image based on information on the rendering style and the color effect.

As described above, a non-transitory computer-readable storage medium may store one or more programs comprising instructions that, when executed by a processor 120 of a wearable electronic device 101 including a camera 180 and a display 160, cause a software application to identify a first image including a visual object. The non-transitory computer-readable storage medium may store one or more programs comprising instructions that, when executed by the processor 120, based on a property of the visual object in the first image, cause to identify a color effect to be applied to a portion of a background image corresponding to the visual object. The non-transitory computer-readable storage medium may store one or more programs comprising instructions that, when executed by the processor 120, cause to identify a rendering style that is applied to the first image. The non-transitory computer-readable storage medium may store one or more programs comprising instructions that, when executed by the processor 120, cause to obtain a third image as the background image by converting a second image, obtained through the camera 180, representing an environment around the wearable electronic device, based on the color effect and the rendering style. The non-transitory computer-readable storage medium may store one or more programs comprising instructions that, when executed by the processor 120, cause to display the first image together with the third image through the display. The property may include luminescent property, texture property, or temperature property. The rendering style may include a cartoon style, a retro style, an outline style, or a black and white style.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment of the disclosure are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled to/with", or "connected to/with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block,", "unit", "part,", "portion" or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101) comprising:
a camera (180);
a display (160); and
a processor (120),
wherein the processor (120) is configured to:
identify a first image (340-1, 340-2, 340-3, 340-n) including a visual object through a software application;
based on a property of the visual object in the first image (340-1, 340-2, 340-3, 340-n), identify a color effect to be applied to a portion of a background image corresponding to the visual object;
identify rendering style applied to the first image (340-1, 340-2, 340-3, 340-n);
obtain a third image (365) as the background image by converting a second image (355), obtained through the camera (180), representing an environment around the wearable electronic device (101) based on the color effect and the rendering style, and
display the first image (340-1, 340-2, 340-3, 340-n) together with the third image (365) through the display (160),
wherein the property includes luminescent property, texture property, or temperature property,
wherein the rendering style includes cartoon style, retro style, outline style, or black and white style.

2. The wearable electronic device (101) of claim 1,
wherein the processor (120) is configured to:
identify a region where the software application is displayed through the display (160),
and
in case that the region is an entire region of the display (160), obtain information on rendering style of the software application.

3. The wearable electronic device (101) of claim 1,
wherein the processor (120) is configured to:
identify a region where each of a plurality of software applications including the software application and another software application is displayed through the display (160);
obtain first information on rendering style of the software application for a first region where the software application is displayed with respect to an entire region of the display (160); and
obtain second information on rendering style of the another software application for a second region where the another software application is displayed with respect to the entire region of the display (160).

4. The wearable electronic device (101) of claim 3,
wherein the processor (120) is configured to:
obtain a fourth image based on the first information and the color effect with respect to the first region of the second image (355),
obtain a fifth image based on the second information and another color effect determined based on another visual object with another property in another first image (340-1, 340-2, 340-3, 340-n) obtained through the another software application with respect to the second region of the second image (355), and
obtain the third image (365) by synthesizing the fourth image and the fifth image.

5. The wearable electronic device (101) of claim 3,
wherein the processor (120) is configured to:
obtain first boundary information on the first region from the software application, and
obtain second boundary information on the second region from the another software application.

6. The wearable electronic device (101) of claim 3,
wherein the processor (120) is configured to:
based on identifying a region where a gaze of a user of the wearable electronic device (101) is focusing, identify the software application from among the plurality of software applications; and
identify a first rendering style region including the first region where the software application is displayed,
wherein the third image (365) is obtained by converting the second image (355) based on the first information with respect to the first rendering style region of the second image (355).

7. The wearable electronic device (101) of claim 6,
wherein the processor (120) is configured to:
in case that a time when the gaze is positioned within a region corresponding to the software application in the display (160) is greater than or equal to a specified time, identify an extended region with respect to the first rendering style region,
wherein the third image (365) is obtained by converting the second image (355) based on the first information with respect to the extended region of the second image (355).

8. The wearable electronic device (101) of claim 1,
wherein the processor (120) is configured to:
obtain information on the rendering style based on manifest file information of the software application,
obtain information on the rendering style based on execution file information of the software application, or
obtain information on the rendering style based on code information indicating a shader of the software application.

9. The wearable electronic device (101) of claim 8,
wherein the processor (120) is configured to:
in case that not obtaining information on the rendering style through the first image (340-1, 340-2, 340-3, 340-n), the manifest file information, the execution file information, or the code information indicating the shader, display, through the display (160) to a user, a plurality of presets determined based on rendering result of the software application, and
based on a response of the user for a preset from among the plurality of presets, obtain the information on the rendering style of the software application.

10. The wearable electronic device (101) of claim 1,
wherein the processor (120) is configured to:
based on an input of a user of the wearable electronic device (101), identify a portion region of the second image (355), and
obtain the third image (365) by converting the portion region of the second image (355) based on information on the rendering style and the color effect.

11. A method performed by a wearable electronic device (101), comprising:
identifying a first image (340-1, 340-2, 340-3, 340-n) including a visual object through a software application;
based on a property of the visual object in the first image (340-1, 340-2, 340-3, 340-n), identifying a color effect to be applied to a portion of a background image corresponding to the visual object;
identifying rendering style applied to the first image (340-1, 340-2, 340-3, 340-n);
obtaining a third image (365) as the background image by converting a second image (355), obtained through a camera (180) of the wearable electronic device (101), representing an environment around the wearable electronic device (101) based on the color effect and the rendering style, and
displaying the first image (340-1, 340-2, 340-3, 340-n) together with the third image (365) through a display of the wearable electronic device (101),
wherein the property includes luminescent property, texture property, or temperature property,
wherein the rendering style includes cartoon style, retro style, outline style, or black and white style.

12. The method of claim 11, the method comprising:
identifying a region where the software application is displayed through the display (160),
and
in case that the region is an entire region of the display (160), obtaining information on rendering style of the software application.

13. The method of claim 11, the method comprising:
identifying a region where each of a plurality of software applications including the software application and another software application is displayed through the display (160);
obtaining first information on rendering style of the software application for a first region where the software application is displayed with respect to an entire region of the display (160);
and
obtaining second information on rendering style of the another software application for a second region where the another software application is displayed with respect to the entire region of the display (160).

14. The method of claim 13, the method comprising:
obtaining a fourth image based on the first information and the color effect with respect to the first region of the second image (355),
obtaining a fifth image based on the second information and another color effect determined based on another visual object with another property in another first image (340-1, 340-2, 340-3, 340-n) obtained through the another software application with respect to the second region of the second image (355), and
obtaining the third image (365) by synthesizing the fourth image and the fifth image.

15. A non-transitory computer readable storage medium storing one or more programs including instructions that, when executed by a processor (120) of a wearable electronic device (101) including a camera (180) and a display, cause the wearable electronic device (101) to:
identify a first image (340-1, 340-2, 340-3, 340-n) including a visual object through a software application;
based on a property of the visual object in the first image (340-1, 340-2, 340-3, 340-n), identify a color effect to be applied to a portion of a background image corresponding to the visual object;
identify rendering style applied to the first image (340-1, 340-2, 340-3, 340-n);
obtain a third image (365) as the background image by converting a second image (355), obtained through the camera (180), representing an environment around the wearable electronic device (101) based on the color effect and the rendering style; and
display the first image (340-1, 340-2, 340-3, 340-n) together with the third image (365) through the display (160),
wherein the property includes luminescent property, texture property, or temperature property,
wherein the rendering style includes cartoon style, retro style, outline style, or black and white style.

## Patentansprüche

1. Tragbare elektronische Vorrichtung (101), umfassend:
eine Kamera (180);
eine Anzeige (160); und
einen Prozessor (120),
wobei der Prozessor (120) zu Folgendem konfiguriert ist:
Identifizieren eines ersten Bildes (340-1, 340-2, 340-3, 340-n), das ein visuelles Objekt beinhaltet, über eine Softwareanwendung;
Identifizieren eines Farbeffekts, der auf einen Abschnitt eines Hintergrundbilds anzuwenden ist, das dem visuellen Objekt entspricht, basierend auf einer Eigenschaft des visuellen Objekts in dem ersten Bild (340-1, 340-2, 340-3, 340-n);
Identifizieren des Wiedergabestils, der auf das erste Bild (340-1, 340-2, 340-3, 340-n) angewendet wird;
Erhalten eines dritten Bildes (365) als Hintergrundbild durch Umwandeln eines zweiten Bildes (355), das über die Kamera (180) erhalten wird und eine Umgebung um die tragbare elektronische Vorrichtung (101) darstellt, basierend auf dem Farbeffekt und dem Wiedergabestil und
Anzeigen des ersten Bildes (340-1, 340-2, 340-3, 340-n) zusammen mit dem dritten Bild (365) über die Anzeige (160), wobei die Eigenschaft eine Lumineszenzeigenschaft, eine Textureigenschaft oder eine Temperatureigenschaft beinhaltet, wobei der Wiedergabestil einen Cartoon-Stil, einen Retro-Stil, einen Umriss-Stil oder einen Schwarz-Weiß-Stil beinhaltet.

2. Tragbare elektronische Vorrichtung (101) nach Anspruch 1,
wobei der Prozessor (120) zu Folgendem konfiguriert ist:
Identifizieren einer Region, in der die Softwareanwendung durch die Anzeige (160) angezeigt wird, und
Erhalten von Informationen über den Wiedergabestil der Softwareanwendung für den Fall, dass die Region eine gesamte Region der Anzeige (160) ist.

3. Tragbare elektronische Vorrichtung (101) nach Anspruch 1,
wobei der Prozessor (120) zu Folgendem konfiguriert ist:
Identifizieren einer Region, in der jede einer Vielzahl von Softwareanwendungen, welche die Softwareanwendung und eine andere Softwareanwendung beinhaltet, über die Anzeige (160) angezeigt wird;
Erhalten von ersten Informationen über den Wiedergabestil der Softwareanwendung für eine erste Region, in der die Softwareanwendung in Bezug auf eine gesamte Region der Anzeige (160) angezeigt wird; und
Erhalten von zweiten Informationen über den Wiedergabestil der anderen Softwareanwendung für eine zweite Region, in der die andere Softwareanwendung in Bezug auf die gesamte Region der Anzeige (160) angezeigt wird.

4. Tragbare elektronische Vorrichtung (101) nach Anspruch 3,
wobei der Prozessor (120) zu Folgendem konfiguriert ist:
Erhalten eines vierten Bildes basierend auf den ersten Informationen und dem Farbeffekt in Bezug auf die erste Region des zweiten Bildes (355),
Erhalten eines fünften Bildes basierend auf den zweiten Informationen und einem anderen Farbeffekt, der basierend auf einem anderen visuellen Objekt mit einer anderen Eigenschaft in einem anderen ersten Bild (340-1, 340-2, 340-3, 340-n) bestimmt wurde, das über die andere Softwareanwendung in Bezug auf die zweite Region des zweiten Bildes (355) erhalten wurde, und
Erhalten des dritten Bildes (365) durch Synthetisieren des vierten Bildes und des fünften Bildes.

5. Tragbare elektronische Vorrichtung (101) nach Anspruch 3,
wobei der Prozessor (120) zu Folgendem konfiguriert ist:
Erhalten von ersten Grenzinformationen über die erste Region von der Softwareanwendung und
Erhalten von zweiten Grenzinformationen über die zweite Region von der anderen Softwareanwendung.

6. Tragbare elektronische Vorrichtung (101) nach Anspruch 3,
wobei der Prozessor (120) zu Folgendem konfiguriert ist:
Identifizieren der Softwareanwendung aus der Vielzahl von Softwareanwendungen basierend auf Identifizieren einer Region, in der ein Blick eines Benutzers der tragbaren elektronischen Vorrichtung (101) fokussiert ist; und
Identifizieren einer ersten Wiedergabestilregion, welche die erste Region beinhaltet, in der die Softwareanwendung angezeigt wird,
wobei das dritte Bild (365) durch Umwandeln des zweiten Bildes (355) basierend auf den ersten Informationen in Bezug auf die erste Wiedergabestilregion des zweiten Bildes (355) erhalten wird.

7. Tragbare elektronische Vorrichtung (101) nach Anspruch 6,
wobei der Prozessor (120) zu Folgendem konfiguriert ist:
Identifizieren einer erweiterten Region in Bezug auf die erste Wiedergabestilregion für den Fall, dass eine Zeit, zu welcher der Blick innerhalb einer Region positioniert ist, die der Softwareanwendung in der Anzeige (160) entspricht, größer als eine vorgegebene Zeit oder gleich dieser ist,
wobei das dritte Bild (365) durch Umwandeln des zweiten Bildes (355) basierend auf den ersten Informationen in Bezug auf den erweiterten Bereich des zweiten Bildes (355) erhalten wird.

8. Tragbare elektronische Vorrichtung (101) nach Anspruch 1,
wobei der Prozessor (120) zu Folgendem konfiguriert ist:
Erhalten von Informationen über den Wiedergabestil basierend auf Manifestdateiinformationen der Softwareanwendung,
Erhalten von Informationen über den Wiedergabestil basierend auf Ausführungsdateiinformationen der Softwareanwendung oder
Erhalten von Informationen über den Wiedergabestil basierend auf Code-Informationen, die einen Shader der Softwareanwendung angeben.

9. Tragbare elektronische Vorrichtung (101) nach Anspruch 8,
wobei der Prozessor (120) zu Folgendem konfiguriert ist:
Anzeigen einer Vielzahl von Voreinstellungen, die basierend auf dem Wiedergabeergebnis der Softwareanwendung bestimmt wurden, für einen Benutzer über die Anzeige (160) für den Fall, dass keine Informationen über den Wiedergabestil über das erste Bild (340-1, 340-2, 340-3, 340-n), die Manifestdateiinformationen, die Ausführungsdateiinformationen oder die Code-Informationen, die den Shader angeben, erhalten werden, und
Erhalten der Informationen über den Wiedergabestil der Softwareanwendung basierend auf einer Antwort des Benutzers für eine Voreinstellung aus der Vielzahl von Voreinstellungen.

10. Tragbare elektronische Vorrichtung (101) nach Anspruch 1,
wobei der Prozessor (120) zu Folgendem konfiguriert ist:
Identifizieren einer Abschnittsregion des zweiten Bildes (355) basierend auf einer Eingabe eines Benutzers der tragbaren elektronischen Vorrichtung (101) und
Erhalten des dritten Bildes (365) durch Umwandeln der Abschnittsregion des zweiten Bildes (355) basierend auf Informationen über den Wiedergabestil und den Farbeffekt.

11. Verfahren, das durch eine tragbare elektronische Vorrichtung (101) durchgeführt wird, umfassend:
Identifizieren eines ersten Bildes (340-1, 340-2, 340-3, 340-n), das ein visuelles Objekt beinhaltet, über eine Softwareanwendung;
Identifizieren eines Farbeffekts, der auf einen Abschnitt eines Hintergrundbilds anzuwenden ist, das dem visuellen Objekt entspricht, basierend auf einer Eigenschaft des visuellen Objekts in dem ersten Bild (340-1, 340-2, 340-3, 340-n);
Identifizieren des Wiedergabestils, der auf das erste Bild (340-1, 340-2, 340-3, 340-n) angewendet wird;
Erhalten eines dritten Bildes (365) als Hintergrundbild durch Umwandeln eines zweiten Bildes (355), das über eine Kamera (180) der tragbaren elektronischen Vorrichtung (101) erhalten wird und eine Umgebung um die tragbare elektronische Vorrichtung (101) darstellt, basierend auf dem Farbeffekt und dem Wiedergabestil und
Anzeigen des ersten Bildes (340-1, 340-2, 340-3, 340-n) zusammen mit dem dritten Bild (365) über eine Anzeige der tragbaren elektronischen Vorrichtung (101),
wobei die Eigenschaft eine Lumineszenzeigenschaft, eine Textureigenschaft oder eine Temperatureigenschaft beinhaltet,
wobei der Wiedergabestil einen Cartoon-Stil, einen Retro-Stil, einen Umriss-Stil oder einen Schwarz-Weiß-Stil beinhaltet.

12. Verfahren nach Anspruch 11, wobei das Verfahren Folgendes umfasst:
Identifizieren einer Region, in der die Softwareanwendung durch die Anzeige (160) angezeigt wird, und
Erhalten von Informationen über den Wiedergabestil der Softwareanwendung für den Fall, dass die Region eine gesamte Region der Anzeige (160) ist.

13. Verfahren nach Anspruch 11, wobei das Verfahren Folgendes umfasst:
Identifizieren einer Region, in der jede einer Vielzahl von Softwareanwendungen, welche die Softwareanwendung und eine andere Softwareanwendung beinhaltet, über die Anzeige (160) angezeigt wird;
Erhalten von ersten Informationen über den Wiedergabestil der Softwareanwendung für eine erste Region, in der die Softwareanwendung in Bezug auf eine gesamte Region der Anzeige (160) angezeigt wird; und
Erhalten von zweiten Informationen über den Wiedergabestil der anderen Softwareanwendung für eine zweite Region, in der die andere Softwareanwendung in Bezug auf die gesamte Region der Anzeige (160) angezeigt wird.

14. Verfahren nach Anspruch 13, wobei das Verfahren Folgendes umfasst:
Erhalten eines vierten Bildes basierend auf den ersten Informationen und dem Farbeffekt in Bezug auf die erste Region des zweiten Bildes (355),
Erhalten eines fünften Bildes basierend auf den zweiten Informationen und einem anderen Farbeffekt, der basierend auf einem anderen visuellen Objekt mit einer anderen Eigenschaft in einem anderen ersten Bild (340-1, 340-2, 340-3, 340-n) bestimmt wurde, das über die andere Softwareanwendung in Bezug auf die zweite Region des zweiten Bildes (355) erhalten wurde, und
Erhalten des dritten Bildes (365) durch Synthetisieren des vierten Bildes und des fünften Bildes.

15. Nicht flüchtiges computerlesbares Speichermedium, auf dem ein oder mehrere Programme gespeichert sind, die Anweisungen beinhalten, die bei Ausführung durch einen Prozessor (120) einer tragbaren elektronischen Vorrichtung (101), die eine Kamera (180) und eine Anzeige beinhaltet, die tragbare elektronische Vorrichtung (101) zu Folgendem veranlassen:
Identifizieren eines ersten Bildes (340-1, 340-2, 340-3, 340-n), das ein visuelles Objekt beinhaltet, über eine Softwareanwendung;
Identifizieren eines Farbeffekts, der auf einen Abschnitt eines Hintergrundbilds anzuwenden ist, das dem visuellen Objekt entspricht, basierend auf einer Eigenschaft des visuellen Objekts in dem ersten Bild (340-1, 340-2, 340-3, 340-n);
Identifizieren des Wiedergabestils, der auf das erste Bild (340-1, 340-2, 340-3, 340-n) angewendet wird;
Erhalten eines dritten Bildes (365) als Hintergrundbild durch Umwandeln eines zweiten Bildes (355), das über die Kamera (180) erhalten wird und eine Umgebung um die tragbare elektronische Vorrichtung (101) darstellt, basierend auf dem Farbeffekt und dem Wiedergabestil; und
Anzeigen des ersten Bildes (340-1, 340-2, 340-3, 340-n) zusammen mit dem dritten Bild (365) über die Anzeige (160), wobei die Eigenschaft eine Lumineszenzeigenschaft, eine Textureigenschaft oder eine Temperatureigenschaft beinhaltet, wobei der Wiedergabestil einen Cartoon-Stil, einen Retro-Stil, einen Umriss-Stil oder einen Schwarz-Weiß-Stil beinhaltet.

## Revendications

1. Dispositif électronique à porter (101) comprenant :
une caméra (180) ;
un affichage (160) ; et
un processeur (120),
dans lequel le processeur (120) est configuré pour :
identifier une première image (340-1, 340-2, 340-3, 340-n) comprenant un objet visuel par le biais d'une application logicielle ;
sur la base d'une propriété de l'objet visuel dans la première image (340-1, 340-2, 340-3, 340-n), identifier un effet de couleur à appliquer à une partie d'une image d'arrière-plan correspondant à l'objet visuel ;
identifier le style de rendu appliqué à la première image (340-1, 340-2, 340-3, 340-n) ;
obtenir une troisième image (365) comme image d'arrière-plan en convertissant une deuxième image (355), obtenue par le biais de la caméra (180), représentant un environnement autour du dispositif électronique à porter (101) sur la base de l'effet de couleur et du style de rendu, et
afficher la première image (340-1, 340-2, 340-3, 340-n) conjointement à la troisième image (365) par le biais de l'affichage (160),
dans lequel la propriété comprend une propriété luminescente, une propriété de texture ou une propriété de température, dans lequel le style de rendu comprend un style dessin animé, un style rétro, un style de contour ou un style noir et blanc.

2. Dispositif électronique à porter (101) selon la revendication 1,
dans lequel le processeur (120) est configuré pour :
identifier une région où l'application logicielle est affichée par le biais de l'affichage (160),
et
dans le cas où la région est une région entière de l'affichage (160), obtenir des informations sur le style de rendu de l'application logicielle.

3. Dispositif électronique à porter (101) selon la revendication 1,
dans lequel le processeur (120) est configuré pour :
identifier une région où chacune d'une pluralité d'applications logicielles comprenant l'application logicielle et une autre application logicielle est affichée par le biais de l'affichage (160) ;
obtenir des premières informations sur le style de rendu de l'application logicielle pour une première région où l'application logicielle est affichée par rapport à une région entière de l'affichage (160) ; et
obtenir des deuxièmes informations sur le style de rendu de l'autre application logicielle pour une deuxième région où l'autre application logicielle est affichée par rapport à la région entière de l'affichage (160).

4. Dispositif électronique à porter (101) selon la revendication 3,
dans lequel le processeur (120) est configuré pour :
obtenir une quatrième image sur la base des premières informations et de l'effet de couleur par rapport à la première région de la deuxième image (355),
obtenir une cinquième image sur la base des deuxièmes informations et d'un autre effet de couleur déterminé sur la base d'un autre objet visuel avec une autre propriété dans une autre première image (340-1, 340-2, 340-3, 340-n) obtenue par le biais de l'autre application logicielle par rapport à la deuxième région de la deuxième image (355), et
obtenir la troisième image (365) en synthétisant la quatrième image et la cinquième image.

5. Dispositif électronique à porter (101) selon la revendication 3,
dans lequel le processeur (120) est configuré pour :
obtenir des premières informations de limite sur la première région à partir de l'application logicielle, et
obtenir des deuxièmes informations de limite sur la deuxième région à partir de l'autre application logicielle.

6. Dispositif électronique à porter (101) selon la revendication 3,
dans lequel le processeur (120) est configuré pour :
sur la base de l'identification d'une région où se concentre le regard d'un utilisateur du dispositif électronique à porter (101), identifier l'application logicielle parmi la pluralité d'applications logicielles ; et
identifier une première région de style de rendu comprenant la première région où l'application logicielle est affichée,
dans lequel la troisième image (365) est obtenue en convertissant la deuxième image (355) sur la base des premières informations par rapport à la première région de style de rendu de la deuxième image (355).

7. Dispositif électronique à porter (101) selon la revendication 6,
dans lequel le processeur (120) est configuré pour :
dans le cas où un temps pendant lequel le regard est positionné dans une région correspondant à l'application logicielle dans l'affichage (160) est supérieur ou égal à un temps spécifié, identifier une région étendue par rapport à la première région de style de rendu,
dans lequel la troisième image (365) est obtenue en convertissant la deuxième image (355) sur la base des premières informations par rapport à la région étendue de la deuxième image (355).

8. Dispositif électronique à porter (101) selon la revendication 1,
dans lequel le processeur (120) est configuré pour :
obtenir des informations sur le style de rendu sur la base des informations du fichier manifeste de l'application logicielle,
obtenir des informations sur le style de rendu sur la base des informations du fichier d'exécution de l'application logicielle, ou
obtenir des informations sur le style de rendu sur la base d'informations de code indiquant un ombrage de l'application logicielle.

9. Dispositif électronique à porter (101) selon la revendication 8,
dans lequel le processeur (120) est configuré pour :
en cas de non-obtention d'informations sur le style de rendu au moyen de la première image (340-1, 340-2, 340-3, 340-n), les informations du fichier manifeste, les informations du fichier d'exécution ou les informations de code indiquant l'ombrage, afficher, par le biais de l'affichage (160) à un utilisateur, une pluralité de préréglages déterminés sur la base du résultat du rendu de l'application logicielle, et
sur la base d'une réponse de l'utilisateur pour un préréglage parmi la pluralité de préréglages, obtenir les informations sur le style de rendu de l'application logicielle.

10. Dispositif électronique à porter (101) selon la revendication 1,
dans lequel le processeur (120) est configuré pour :
sur la base d'une entrée d'un utilisateur du dispositif électronique à porter (101), identifier une région de partie de la deuxième image (355), et
obtenir la troisième image (365) en convertissant la région de partie de la deuxième image (355) sur la base des informations sur le style de rendu et de l'effet de couleur.

11. Procédé exécuté par un dispositif électronique à porter (101), comprenant :
l'identification d'une première image (340-1, 340-2, 340-3, 340-n) comprenant un objet visuel par le biais d'une application logicielle ;
sur la base d'une propriété de l'objet visuel dans la première image (340-1, 340-2, 340-3, 340-n), l'identification d'un effet de couleur à appliquer à une partie d'une image d'arrière-plan correspondant à l'objet visuel ;
l'identification du style de rendu appliqué à la première image (340-1, 340-2, 340-3, 340-n) ;
l'obtention d'une troisième image (365) comme image d'arrière-plan en convertissant une deuxième image (355), obtenue par le biais d'une caméra (180) du dispositif électronique à porter (101), représentant un environnement autour du dispositif électronique à porter (101) sur la base de l'effet de couleur et du style de rendu, et
l'affichage de la première image (340-1, 340-2, 340-3, 340-n) conjointement à la troisième image (365) par le biais d'un affichage du dispositif électronique à porter (101),
dans lequel la propriété comprend une propriété luminescente, une propriété de texture ou une propriété de température,
dans lequel le style de rendu comprend un style dessin animé, un style rétro, un style de contour ou un style en noir et blanc.

12. Procédé selon la revendication 11, le procédé comprenant :
l'identification d'une région où l'application logicielle est affichée par le biais de l'affichage (160), et
dans le cas où la région est une région entière de l'affichage (160), l'obtention d'informations sur le style de rendu de l'application logicielle.

13. Procédé selon la revendication 11, le procédé comprenant :
l'identification d'une région où chacune d'une pluralité d'applications logicielles comprenant l'application logicielle et une autre application logicielle est affichée par le biais de l'affichage (160) ;
l'obtention de premières informations sur le style de rendu de l'application logicielle pour une première région où l'application logicielle est affichée par rapport à une région entière de l'affichage (160) ; et
l'obtention de deuxièmes informations sur le style de rendu de l'autre application logicielle pour une deuxième région où l'autre application logicielle est affichée par rapport à la région entière de l'affichage (160).

14. Procédé selon la revendication 13, le procédé comprenant :
l'obtention d'une quatrième image sur la base des premières informations et de l'effet de couleur par rapport à la première région de la deuxième image (355),
l'obtention d'une cinquième image sur la base des deuxièmes informations et d'un autre effet de couleur déterminé sur la base d'un autre objet visuel avec une autre propriété dans une autre première image (340-1, 340-2, 340-3, 340-n) obtenue par le biais de l'autre application logicielle par rapport à la deuxième région de la deuxième image (355), et
l'obtention de la troisième image (365) en synthétisant la quatrième image et la cinquième image.

15. Support de stockage non transitoire lisible par ordinateur stockant un ou plusieurs programmes comprenant des instructions qui, lorsqu'elles sont exécutées par un processeur (120) d'un dispositif électronique à porter (101) comprenant une caméra (180) et un affichage, amènent le dispositif électronique à porter (101) à :
identifier une première image (340-1, 340-2, 340-3, 340-n) comprenant un objet visuel par le biais d'une application logicielle ;
sur la base d'une propriété de l'objet visuel dans la première image (340-1, 340-2, 340-3, 340-n), identifier un effet de couleur à appliquer à une partie d'une image d'arrière-plan correspondant à l'objet visuel ;
identifier le style de rendu appliqué à la première image (340-1, 340-2, 340-3, 340-n) ;
obtenir une troisième image (365) comme image d'arrière-plan en convertissant une deuxième image (355), obtenue par le biais de la caméra (180), représentant un environnement autour du dispositif électronique à porter (101) sur la base de l'effet de couleur et du style de rendu, et
afficher la première image (340-1, 340-2, 340-3, 340-n) conjointement à la troisième image (365) par le biais de l'affichage (160),
dans lequel la propriété comprend une propriété luminescente, une propriété de texture ou une propriété de température,
dans lequel le style de rendu comprend un style dessin animé, un style rétro, un style de contour ou un style noir et blanc.
